(19) Europäisches Patentamt
European Patent Office
Office européen des brevets

(11) Publication number: **0 069 273**
**A2**

# (12) EUROPEAN PATENT APPLICATION

(21) Application number: 82105474.9

(51) Int. Cl.³: G 01 B 7/04

(22) Date of filing: 22.06.82

(30) Priority: 26.06.81 US 277844
26.06.81 US 277638

(43) Date of publication of application:
12.01.83 Bulletin 83/2

(84) Designated Contracting States:
AT BE CH DE FR GB IT LI LU NL SE

(71) Applicant: Autech Corporation
7060 Huntley Road
Columbus Ohio 43229(US)

(72) Inventor: Foster, George B.
7140 Linworth Road
Columbus, Ohio 43085(US)

(72) Inventor: Cullen, Donald L.
7126 Stone Court
Worthington, Ohio 43085(US)

(72) Inventor: Robertson, John A.
683 Hilltop Court
Chillicothe, Ohio 45601(US)

(72) Inventor: Mandalaywala, Ramakant H.
3000 Cortona Road
Columbus, Ohio 43204(US)

(74) Representative: KUHNEN & WACKER
Patentanwaltsbüro
Schneggstrasse 3-5 Postfach 1729
D-8050 Freising(DE)

## (54) Method and apparatus for measuring length.

(57) A sensor of process velocity is utilized to provide a rate signal proportionally related to process velocity over at least a short term basis but subject to possible variations in the constant of proportionality. This variable rate signal is converted to a substantially fixed rate signal (per unit length of material being produced by or passed through the sensed process) by a programmable pulse rate converter controlled by a highly accurate (but sometimes unreliable) mark/sense length measurement gauge. The result is a length measurement of the passing material which is both highly accurate and reliable under all expected measurement conditions.

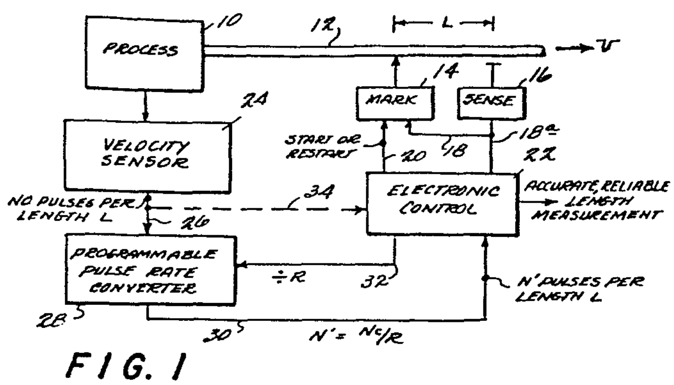


FIG. 1

EP 0 069 273 A2

# METHOD AND APPARATUS FOR MEASURING LENGTH

## SPECIFICATION

This invention generally relates to method and apparatus for measuring the length of relatively moving material in a process environment. The process involved may either produce the material being measured, modify it or merely pass the material therethrough.

Either the process or the material itself is of the type that can produce a process velocity-related signal having a signal rate parameter related to the velocity of relatively moving material to be measured even though the constant of proportionality involved may vary significantly with respect to time. The presently preferred exemplary embodiment is especially suited for measuring the running lengths of insulated wire during its various stages of manufacture although it is also especially suited for use in the hose, tubing and other industries as will be appreciated.

The requirement for accurate and reliable length measurement of relatively moving material is commonplace in many manufacturing environments. For example, in the manufacture of insulated wire products, it is necessary to accurately and reliably measure the length of manufactured insulated wire stored on a given spool, the relative location of detected defects within that length of wire and many other types of data related to the initial establishment of accurate and reliable length measurements. Such information is extremely useful, for example, when different spools of insulated single strand conductors are to be combined into multi-conductor cables and the like. Those in the art will also recognize many additional usages for this kind of information.

In general, lack of accurate and reliable length measurement data inherently results in material wastage and/or decreased productivity in many manufacturing processes. Since many of the advantages to be obtained by increased accuracy and reliability and length measurements for such manufacturing processes are generally well known and accepted or readily deducible, it is not necessary to here undertake an exhaustive explanation of these advantages. Rather, it should suffice merely to note that there are many significant economic advantages to be had by increasing the accuracy and reliability of the measurement of running lengths of a relatively moving material. Typical present day measurement accuracies on the order of 1% can often be increased by one or more orders of magnitude using this invention.

Probably the most common conventional length measurement system now in use involves a tachometer in rolling contact with relatively moving material. Such rolling contact may be had by a single roller or by pairs of opposed rollers on either side of the moving material and/or by belted drive surfaces between such rollers and the relatively moving material. The basic theory underlying these traditional length measurement gauges is relatively simple. Since the nominal circumference of the rolling contact surface is known, and since the number of electrical pulses or other signals produced per revolution of that surface is detectable, a straightforward counting or other integration of such tachometer output pulses can be obtained to obtain a length measurement.

However, such traditional rolling contact tachometer length gauges are inherently subject to inaccuracy over the long term due, for example, to: slippage between the moving material and the driven surface; vibrations which may cause the driven surface to leave the relatively moving surface for short times; and accumulations of extraneous material or wear on the driven surface, either of which change its circumference. Accordingly, while such traditional rolling contact tachometer gauges are extremely reliable in producing an output of some kind in response to the passage of material at any velocity, the accuracy of this output is subject to various types of error.

Mark/sense length measuring gauges are also known in the prior art. For example, such systems are taught in at least the following prior art publications:

1. "Non-Contact Measurement System for Insulating Wire and Cable Length" by Donald L. Cullen, Wire Technology, 9/10:78, pages 80, 82;

2. U.S. Patent No. 2,989,690 - Cook (1961); and

3. U.S. Patent No. 3,303,419 - Gith (1967).

Mark/sense length measuring gauges use a marking transducer to place a discrete physically detectable mark on the relatively moving surface which is later detected by a sensing transducer located downstream at a predetermined distance L. The detection of such a previously recorded mark is also used to retrigger the marking transducer and, accordingly, once started, this type of mark/sense system will continuously mark the moving material at accurately determined intervals and the number of such sensed marks can be utilized to obtain a highly accurate measure of running length.

The Cullen article, for example, describes a mark/sense type of system which utilizes a heat source to place a "heat pulse" on the passing surface. However, the heat source has a relatively limited life and the separation between the heat source and detector must be adjusted in accordance with line speed since the heat pulse deteriorates with time. The heat source also has a relatively low maximum repetition rate which requires the use of a constant trigger frequency for higher line speeds combined with a velocity-to-length conversion of the detector output for these higher line speeds. A marriage of these two different embodiments is also proposed at Figure 5 of Cullen. Nevertheless, the system as proposed by Cullen has several deficiencies including an inability to operate at all with extremely low line speeds (e.g. where the material in the line may actually stop).

The Cook patent primarily describes a magnetic marking/sensing embodiment for use with ferromagnetic materials. It also describes a light modulation technique and an electrostatic mark/sense technique (Figure 7). Cook's electrostatic tranducers are based on capacitive effects and are in actual contact with the running length of material. In addition, all of Cook's systems would appear to be subject to many of the same types of disadvantages already noted with respect to the Cullen systems.

Gith also teaches an electrostatic mark/sense measuring system for fiber threads but with the mark/sense electrodes out of contact with the thread and the added feature of being able to switch between two different detectors located differing distances away from an electrostatic pulse marker as a function of running speed. Gith is thus similar to Cullen in recognizing that the distance between the mark and sense transducers should be varied for different line speeds where the physical mark involved deteriorates with time. Gith's system also appears to have many of the same types of disadvantages already noted with respect to Cullen.

Thus, in the prior art, length measurements have been made by effectively counting the revolutions of driven counter wheels added to the system especially for that purpose or of already present drive rollers, idler rollers, etcetera which are in direct contact with the moving material to be measured. Length measurements have also been made by applying "markers" to a moving material and detecting the same mark at a known separation distance as just explained. It is believed that optical and/or microwave Doppler signals may also have been used to obtain surface velocity measurements for the material to be measured.

Other length measurement gauges of various types may have also been used or proposed in the prior art; however, all such techniques have inherent accuracy and/or reliability limitations that are undesirable. For example, the direct contact tachometer based measurements suffer from slippage, wear, contaminant build-up on the counter wheel, driver or idler roller, etcetera. Doppler based measurements as well as the mark/sense length gauges become virtually or totally inoperative at lower process speeds or require adjustment in spacing between transducers or the like for different material speed ranges and may also be inaccurate during acceleration or deceleration of the material line speed. At the same time, reducing the separation between the mark/sense transducers for that type of gauge will inherently degrade its measurement accuracy although it does permit the system to be used at lower process velocities.

Ideally (and as is possible using the present invention), a mark/sense length measurement gauge is set up with spacing between its marking and sensing transducers so as to produce a given desired degree of accuracy. For example, if the inherent accuracy of mark definition/detection and its reproducibility is 0.050 inch and if a 0.1% accuracy is desired or required for some particular application, then it follows that the necessary separation distance between the mark/sense transducers be equal to 0.050 divided by .001 or 50 inches. In other words, if the inherent reproducible tolerance for marking and sensing on the surface in question is determined to have a particular value in given units of measure, then this value divided by the desired accuracy level provides the required minimum separation in that same unit of measure between the marking and sensing transducers.

It should be noted that any of the mark/sense length measurement gauges described in these prior art publications are unreliable in that if a mark is for some reason undetected (e.g. because the line stopped or slowed down significantly after the mark was applied but before it passed the detector site), the entire gauge becomes totally inoperative until restarted by some triggering mechanism. That is, since the mark transducer is triggered by the detection of a previously recorded mark, this type of chaining or hand-over-hand methodology totally breaks down once one of the links in the chain is broken. Accordingly, although capable of providing highly accurate length measurement when it is operating normally (within its limits of line speed operation, etc.), such mark/sense length gauges are undesirably unreliable and susceptible to any missed detection of previously marked sites on the moving material and/or to the spurious generation of additional detector outputs which are especially possible with the electrostatic embodiments. It is probably for these and other perhaps related reasons that such mark/sense length measurement gauges have not gained wide usage or popularity in spite of their inherent increased accuracy of measurement and in spite of the fact that they have been known per se for many years.

Now, however, the applicants have discovered method and apparatus for combining a highly reliable but relatively inaccurate tachometer length gauge with a highly accurate but somewhat unreliable mark/sense length gauge to produce a resultant length measurement system that has increased accuracy and reliability over any previously known length measurement system.

For example, in the presently preferred exemplary embodiment, a traditional rolling contact tachometer nominally provides N (e.g. 3600) incremental signals in response to the passage of a measured length L (e.g. 36 inches) of relatively passing material. However, a mark/sense electrostatic length gauge is also employed. It comprises, for example, a pointed corona discharge electrode disposed a substantially constant distance out of contact with the intended path of the relatively moving material and a charge sensing electrode disposed some predetermined distance (e.g. L = 36 inches) downstream from the corona electrode. The highly accurate output from the electrostatic length gauge is then used to correct the less accurate but more reliable output from the tachometer while, at the same time, the highly reliable tachometer output is utilized to generate a time window within which the more accurate expected electrostatic mark should be sensed. If it is not sensed within this time window, the tachometer output is utilized to automatically restart the mark/sense electrostatic gauge.

In addition, spurious outputs from the electrostatic sensor occurring at times other than during the defined window can be disregarded. Accordingly, the tachometer output is utilized to increase the reliability of the electrostatic mark/sense gauge while, in turn, the output of the mark/sense gauge is utilized to increase the accuracy of the tachometer based length measurement. The net result is a highly accurate and reliable length measurement system.

In the exemplary embodiment, this result is achieved, in part, by electrical control circuitry connected to both the mark and sense electrostatic electrodes and to the tachometer so as (1) to actuate the corona discharge electrode in response either to a detected output signal from the sensing electrode or to the counting of a predetermined number of the tachometer output signals and (2) to accumulate a length measurement of the relatively moving material as a function of the number of detected outputs from the charge sensing electrode and of the number of detected incremental signals from the tachometer.

In the preferred exemplary embodiment, the tachometer includes a roller (possibly an existing drive or idler roller) of known circumference disposed for rolling contact with the relatively moving material while the corona discharge electrode is disposed downstream of the roller on a mounting assembly that is fixed with respect to the rotational axis of the roller (which, in turn, may be fixed with respect to the overall machine frame if steps are taken to insure continuous contact between the roller and the measured surface). This arrangement ensures that the pointed corona discharge electrode is disposed a substantially constant distance away from the intended path of the relatively moving material.

In the exemplary embodiment, the charge sensing electrode and reference electrodes associated therewith may be formed in two separable parts which, when in their normal closed positions, substantially surround the intended path of the relatively moving material. When in their separated position, the material can be conveniently inserted within this electrode structure without the need to thread an open end of the material therethrough. For practical manufacturing reasons it is presently preferred to form each charge sensing element as a single linear conductor surrounded by a planar reference electrode. Preferably another planar reference electrode and sensing element is disposed symmetrically on the opposite side of the measured material. One or more rollers having their axes fixed with respect to the sensing electrode are also preferably employed just downstream of the sensing electrode so as to maintain a substantially fixed separation between the measured surface and the sensing electrode. These planar transducer elements can also be formed into mating semi-cylindrical shapes so as to actually entirely surround the intended path of the relatively moving material when in their closed mating position.

In the presently preferred exemplary embodiment, the material contacting roller of the tachometer and the mark/sense electrostatic electrodes are mounted within a metallic tunnel having two open ends for passage of the material therethrough along an intended path of travel. The mark/sense electrodes are separated by a fixed predetermined distance L downstream of the roller and electronic circuits are connected to the tachometer and to the electrodes for producing marking signals to the marking transducer in response to the sensed passage of each area of previously applied electrical charge within a time window defined by counting the tachometer signals or, alternatively, in response to the expiration of that time window without the sensing of any such passage of electrical charged areas. The electronic circuit also accumulates material length measurements of magnitude L for each occurrence of such a marking signal. Tachometer signals occurring between occurrences of the marking signals are utilized so as to record incremental length measurements of magnitude L/N or some integer multiple thereof, where N is the number of tachometer signals nominally produced for each length L of material. Preferably, the metallic tunnel is separable into two parts so as to facilitate initial placement of the material thereinto and the electrostatic transducer electrodes associated therewith are also constructed so as to separate to facilitate initial material placement to the extent that they are designed to surround the intended path of the moving material when in their normal closed positions. The reference and sensing electrodes (which may surround the intended path of the moving material) may be formed from etched printed circuit board materials which can be easily formed in separable portions and conformed to a desired closed path.

The present invention also permits one to use as the basic incremental length measurement, a signal obtained from a process velocity detector which is not in direct contact with the processed material to be measured and which is therefore almost inherently of even less accuracy.

For example, signals related to small incremental measured lengths can be derived from at least the following types of non-contacting processed velocity detectors:

1. a counter for counting the revolutions of a rotating shaft related to the process velocity of the material to be measured but considerably removed from actual contact with the material (e.g. the motor shaft used in a variable speed drive for the process);

2. a frequency detector for a variable frequency AC signal used to control the speed of a process driving motor;

3. a level detector for an analog signal from a voltage-to-speed converter related to a DC or other type of electrical signal speed command for the speed of a process drive motor;

4. an optical frequency transducer output signal based on "speckle" frequencies produced by laser interferometric effects caused by motion of a surface past a laser illumination coupled with a suitable speckle frequency detector;

5. surface velocity sensors based upon Doppler signals in the optical, microwave or other frequency spectrum;

6. air pressure sensors sensing the air pressure of an entrained boundary layer near the moving surface compared to ambient air pressure so as to obtain a measure of velocity;

7. acoustic frequency detector for detecting frequencies of acoustic signals proximate the moving surface related to the velocity of the material to be measured; and

8. any other physical effect that is correlated with velocity of the material to be measured on a short term, proportional basis.

One of the basic principles employed in this invention is the use of a highly accurate but somewhat unreliable mark/sense length gauge to recalibrate a somewhat less accurate but more reliable length gauge based upon the sensed velocity of the material to be measured. In short, the mark/sense length measurement gauge makes unit length measurements to some desired predetermined level of accuracy and such accurate unit length measurement data is then used as a standard to calibrate measured smaller increments of lengths supplied by a more reliable but less accurate higher resolution length measurement gauge.

When, the higher resolution velocity-based length measurement gauges of the type here proposed for use are not in direct contact with the material to be measured, their outputs can often exhibit considerable instability and inaccuracy. In other words, the proportionality constant relating the number of pulses (or any other detectable signal parameter) produced for a unit length measurement made by the mark/sense length gauge may change considerably with respect to time albeit there is a proprotional relationship involved on at least a short term basis (which is normally longer than at least one cycle of the mark/sense length measurement gauge).

In accordance with this invention, such a constant of proportionality is, in effect, continuously measured and the result is used to control a programmable frequency rate converter (or other suitable type of signal parameter ratio converter) so as to maintain an accurate higher resolution output signal based upon the non-contacting process velocity detector input. This accuracy is maintained by continuous recalibration using the lower resolution mark/sense length gauge and its higher inherent accuracy of operation. Of course, as already explained, the reliability of the mark/sense length gauge is also increased by automatically restarting that gauge and/or by masking spurious outputs of the mark/sensor detector using the higher resolution input from the velocity-based length gauge.

Although a contact roller tachometer-based length measurement gauge can be reliably expected to produce nominally standardized signal rates at a relatively fixed constant of proportionality with respect to material speed, the non-contacting velocity sensors utilized with some embodiments of the present invention must be capable of accepting a variety of differing and/or changing pulse rates from the basic velocity sensor. To accomplish this, a pulse rate or (or other signal parameter) ratio converter (PRC) is preferably utilized. Such a converter receives, for example, some number Nc of pulses whch occur between successive "marks" detected in the mark/sense length gauge. The number Nc is then correlated with the unit length accurately measured by the mark/sense gauge so as to vary the constant of proportionality utilized by the PRC thus providing at its output a string of pulses having the desired, nominal, standardized number N per unit length.

In one exemplary embodiment, the PRC device and its velocity proportional transducer are used as an input signal conditioner whose output is in the form of the nominal standard number of pulses that would have been expected from a particular contact roller tachometer-based length measurement gauge thus making it particularly adaptable for use with systems of the type already discussed above. In this exemplary embodiment, the PRC may typically include a programmable pulse divider/multiplier whose output is controlled so as to produce the desired standard number N of normalized pulses between sensed "marks". In operation, the variable PRC ratio is continuously computed and the pulse divider/multiplier reset to utilize the newly computed conversion ratio so as to continuously recalibrate its output and achieve the desired standard pulse count.

Thus, using some embodiments of this invention, it is not necessary to incorporate an extra material contacting tachometer wheel, and its dedicated counter as the raw source of potentially inaccurate but velocity proportional pulses. Rather, the necessary reliable but inaccurate source of high definition pulses may be obtained more indirectly as may be highly desirable for certain applications where additional contact rollers are undesired. There may also be cost savings involved. Alternatively, the second source of high resolution pulses emanating from a non-contacting velocity sensor in accordance with this invention can be treated as simply an additional high resolution data source for comparison with another similar (or dissimilar e.g. material contacting roller tachometer) primary source of high resolution pulses.

This invention thus provides an improved alternate mode of operation for the length measurement systems which do not require any additional interpolating (i.e. high resolution) length measurement gauge that is continually reset by the mark/sense length gauge signal. That is, for applications which already include suitable non-contacting velocity sensor signal sources of the type described above or which could be fitted with such devices, there would be no requirement to include additional material contacting wheels or the like in the system.

These and other objects and advantages of this invention will become better understood by reading the following detailed description of the present preferred exemplary embodiment taken in conjunction with the accompanying drawings, of which:

FIGURE 1 is a block diagram of a first exemplary embodiment of this invention;

FIGURE 2 is a flow chart of a suitable subroutine to be used for updating the constant of proportionality utilized in the pulse rate converter of FIGURE 1;

FIGURE 3 is a block diagram of another exemplary embodiment of this invention utilizing a plurality of process velocity detectors;

FIGURE 4 is a flow chart of a suitable subroutine to be used in conjunction with the embodiment of FIGURE 3;

FIGURE 5 is a block diagram of an exemplary embodiment of this invention which combines a tachometer-based length gauge with a mark/sense length gauge;

FIGURE 6 is a schemetic block diagram of the exemplary embodiment of this invention as applied to the manufacture of insulated wire;

FIGURE 7 is partially cut-away side elevation view of the presently preferred exemplary embodiment of transducer electromechanical apparatus for use with this invention;

FIGURE 8 is a end elevation view of the apparatus shown in FIGURE 7;

FIGURES 9 and 9-1 depict the electrostatic sensing components located within the metallic tunnel of the apparatus shown in FIGURES 7 and 8;

FIGURE 10 is a pictorial depiction of an exemplary front control and display panel for use with the presently preferred exemplary electronic circuits shown in FIGURES 12-15;

FIGURE 11 depicts exemplary internal switch and internal diagnostic displays for use with the panel of FIGURE 10 and the circuits of FIGURES 12-15;

FIGURE 12 is a block diagram of exemplary microprocessor based electronic control circuitry for use with the apparatus of FIGURES 7-11;

FIGURE 13 is a schematic block diagram of exemplary driving circuitry for the corona point discharge electrode of the exemplary apparatus shown in FIGURES 7-12;

FIGURE 14 is an exemplary schematic block diagram of detection circuitry for use with the electrostatic sense electrode of the exemplary system shown in FIGURES 7-13;

FIGURE 15 is a schematic block diagram of detection circuitry presently preferred for use with the system of FIGURES 7-13, and

FIGURES 16-21 are flow diagrams of relevant portions of an exemplary program for use in the microprocessor of FIGURE 12.

The process 10 shown in FIGURE 1 may be any sort of manufacturing or other process in which an elongated material 12 is manufactured, modified, or otherwise passed through at a relative velocity V as indicated in FIGURE 1. A highly accurate length measurement made on the material itself is achieved by using a mark/sense length gauge which includes a marking transducer 14 and a sensing transducer 16 spaced apart a distance L. Each applied mark (electrostatic, magnetic, or any other physically detectable change in properties) by transducer 14 is subsequently sensed by a suitable sense transducer 16. The detection of each such mark is then used to actuate the marking transducer 14 (either directly on line 18 or indirectly on line 20 through an electronic control circuit 22) so as to immediately apply another mark to the surface of the passing material.

In this way, the electronic control circuitry 22 (which may be an appropriate microprocessor-based circuitry as described in detail in the above referenced related copending applications) is provided via line 18a with a highly accurate mesurement of each increment L. Even though such signals occur at a fairly low frequency thus constituting a fairly low resolution length measurement, they are nevertheless highly accurate and can be utilized to recalibrate or correct a higher resolution but less accurate length measurement coming from another source as described in the above referenced related copending applications.

A non-material contacting (or a contacting) velocity sensor 24 is either already present within the process 10 or is added to the process 10 so as to provide some detectable signal parameter (e.g. Nc pulses per length L) at its output on line 26. If the velocity sensor is a material contacting tachometer or the like, the nominal number of pulses per length L will have a fairly standardized known nominal constant of proportionality with the material velocity V. However, since the present invention may also utilize a non-contacting velocity sensor, this presumption cannot necessarily be made. A programmable pulse rate converter 28 is provided to accept the output of the non-contacting velocity sensor 24 and to provide a proportionally related signal parameter (e.g. N' pulses per length L) at its output on line 30. If the constant of proportionality R utilized by the pulse rate converter 28 is appropriately chosen, the output parameter (e.g. N') will have an approximate standarized nominal constant of proportionality with respect to the material velocity V. Accordingly, the electronic control circuit 22 is constructed so as to compute the required constant of proportionality R and to program the programmable pulse rate converter 28 with that constant via line(s) 32.

There are at least two ways that such a constant can be calculated. First of all, since the existing pulse rate conversion constant R is known, the actual number of N' pulses can be counted between detected marks and the number Nc can be inferred or calculated for that same time interval. Since the desired standarized number of signals per unit length measurement is a known quantity N, the desired pulse rate conversion factor R can be calculated by simply dividing Nc by N. The actual occurrences of Nc pulses could also be input to the electronic control circuits 22 via line 34 so as to more directly permit this same type of calculation if desired. Alternatively, the actual parameter N' could be compared to the desired standardized parameter N an the existing pulse rate conversion factor R could be incremented or decremented as appropriate in a feedback loop so as to maintain approximate equality between the compared parameters N' and N. Other types of calculation and/or control of the R conversion factor may also be utilized if desired.

In the preferred exemplary embodiment, the recalibration procedure just described will permit the utilization of N' pulses per length L on line 30 to be utilized to obtain an accurate reliable length measurement. In effect, the mark/sense length measurement gauge is used to continuously recalibrate the higher resolution more reliable velocity-based length measurement gauge.

A suitable microprocessor-based electronic control circuit 22 as well as a suitable mark/sense length measurement gauge is described in the embodiment of FIGURES 5-21. The only modification required is the addition of the programmable pulse rate converter 28 (e.g. this may be a conventional programmable interval counter) and the addition of a suitable subroutine for the program of the microprocessor designed to compute the appropriate pulse rate conversion factor R and to supply it to the PRC. Such a subroutine is shown in FIGURE 2 and it would normally be entered whenever the microprocessor is interrupted by the detection of a new mark. Of course, this subroutine could be included as a part of other subroutines also employed to perform appropriate functions at such times and as already described in the above referenced related copending applications.

Upon entry into the subroutine of FIGURE 2, the number Nc is either recalled or computed at 50 for the elapsed time interval since the last detected mark (as should be appreciated, a similar process averaged over several successive detected mark intervals could also be employed). At 52, the new required pulse rate conversion factor R' is computed by dividing Nc by N. At 54, the programmable pulse rate converter 28 is reprogrammed by setting its pulse rate conversion factor R equal to the newly computed R'. As should be apparent, this actual programming of the PRC may require coordinated input/output operations within the microprocessor based electronic control circuit 22. For example, data identifying the new desired rate conversion factor may be placed on an appropriate data bus and passed through an appropriate I/O port to the PRC which is also simultaneously enabled (via a control bus) to receive such data and to thereafter utilize the new pulse rate conversion factor. The actual changing of effective pulse rate conversion factors may be inherently or otherwise caused to occur in synchronism with the output of a pulse on line 30 as should be appreciated.

In the alternate embodiment of FIGURE 3, the process 10, moving material 12, marking transducer 14, and sensing transducer 16 are all the same as previously described with respect to FIGURE 1. Here, however, there are two non-contacting (or contacting) process velocity detectors 56, 58. The detector 56 produces Nc signals per length L on line 60 which are divided by counter 62 to provide N' signals per length L on line 64. A comparator 66 is connected so as to compare the number N' to the N expected signals per length L between occurrences of detected mark signals on line 18a. The result of this comparison is provided to suitable computational circuits 68 which compute the desired pulse rate conversion factor and change the operation of counter 62 appropriately as should now be apparent.

A similar operation is performed with respect to process detector 58. Here, Nk signals per length L are produced and provided by counter 70 to produce N" signals per length L on line 72. The N" signals occurring between successive detected mark signals on line 18a are then compared by comparator 74 to the N expected signals per length L and the result is utilized by suitable computational circuits 76 to compute a new constant of proportionality K which is thereafter utilized by counter 70 as should be apparent.

Accordingly, with the system of FIGURE 3, there are two recalibrated sources of high resolution signals. Namely, those based upon the first process velocity detector 56 as appearing on line 64 and those based upon the second process velocity detector 58 as appearing on line 72. Both these sources of high resolution recalibrated signals are input to a computational and display circuit 78 as are the detected mark signals on line 18a. The computational and display circuitry 78 may be a microprocessor-based circuit similar to that utilized in the embodiment of FIGURE 1 but having a program which is modified so as to provide alternate or average length measurements based upon the different high resolution input data sources. If desired, the plural sources of high resolution input data can also be used to cross check between each other and to supply missing or corrected data where appropriate as should be apparent. In this regard, one of the plural high resolution sources of input data might be a rolling contact tachometer-based input as described in the above referenced related copending applications.

One exemplary flow diagram for a suitable subroutine for a microprocessor based computational and display circuit 78 is shown at FIGURE 4. There, at 80 and 82, length measurements are accumulated as explained above and/or as explained below with respect to FIGURES 5-21 based upon the individual plural sources (e.g. 56 and 58). At 84, these plural accumulated length measurements are averaged for display at 86. In addition (possibly earlier in the flow chart if desired), the plural accumulated length measurements are compared one to another at 88 and an alarm or other desired corrective action is taken if any differences exceed predetermined limits.

As shown in FIGURE 5, a reliable but less accurate length gauge 100 is effectively combined with an accurate but less reliable length gauge 102 by electronic circuitry 104 which accumulates a corrected length measurement and provides at its output 106 an accurate and reliable length measurement of a relatively moving elongated material 108.

Gauge 100 includes a wheel 110 in rolling contact with the moving material 108. This wheel 110 has a known nominal circumference and drives a tachometer 112 which produces N incremental signals per length L. Gauge 102 includes a marking transducer 114 which, in response to an input stimulus on either line 116 or 118, applies a physically detectable mark 120. A mark sensing transducer 122 is disposed downstream a precise distance L to sense the passage of each marked area 120. As each marked area 120 is sensed, the sensing transducer circuitry 122 generates a mark triggering signal on line 116 to cause the mark transducer 114 to apply yet another mark 120. Accordingly, on line 116a, a signal will appear for each incremental length L which, when it occurs, will represent a very accurate measurement of the distance L. However, if for some reason one of the marked areas 120 is not properly sensed by the transducer 122, there will be a complete loss of signals on line 116a thereafter unless some corrective measure is taken. Accordingly, the reliability of gauge 102 is suspect in many ordinarily expected working environments.

To compensate for this potential unreliability in gauge 102, the highly reliable although less accurate output from tachometer 112 is utilized by the electronic circuitry 104 to generate a restarting signal on line 118 in the event the sense transducer 122 fails to provide a proper output signal on line 116a within a time window defined by counting minimum and maximum numbers of tachometer signals occurring since the just previous output of the sense transducer 122. In this manner, the reliability of gauge 102 is markedly improved and, at the same time, if the output of sense transducer 122 is ignored except during this predetermined time window, spurious additional outputs of sense transducer 122 will be masked thus also increasing the accuracy and reliability of gauge 102.

If the most common tachometer error tends to be caused by accumulations on the tachometer roller, then its errors will tend to be on the low side and an asymmetrical window weighted to the low side of the expected standard number of tachometer pulses is preferred. For other expected tachometer errors in particular environments, other window dispensing may be desirable.

Actually, in the preferred exemplary embodiment, the reliable but less accurate output of tachometer of 112 is utilized to accumulate incremental lengths of a magnitude L/N (or integer multiples thereof) and the occurrence of the expected output of sense transducer 122 during a time window defined by counting minimum and maximum numbers of signals from tachometer 112 is then utilized to update the accumulation of measured distance so as to insure an accumulation of magnitude L between occurrences of output signals from the sense transducer 122. The final accumulated corrected length measurement output at 106 thus has more accuracy and reliability than could be expected from either gauge 100 or 102 if operated alone.

A specific application of such an improved length measurement system is shown in FIGURE 6. Here, a spool 200 of bare wire 202 is passed through an insulation extruder 204 to produce an insulated strand of wire 206. The improved length measurement gauge 208 of this invention is then employed to measure the running length of insulated wire before it is rewound on spool 210. In this manner, accurate length measurements of finished product on spool 210 can be accumulated. In addition, when used in conjunction with defect detectors and the like, accurate relative location of detected defects can be recorded as well as other important process control and/or management information related to the measurement of length.

In the exemplary embodiment shown at FIGURE 6, tachometer roller 212 (possibly an existing drive or idle roller) is biased (e.g. by an upper opposed roller) into rolling contact with the moving insulated wire 206. It is also conventionally mechanically coupled to a tachometer pulse generator 214 that generates a given number of pulses for each revolution (or increment thereof) of roller 212 (e.g. 1200 pulses per foot). The output from such a pulse generator then constitutes the N incremental signals per length L appearing on line 124 in FIGURE 5.

A pointed corona discharge electrode 216 (e.g. a sewing needle having an approximately 0.50 inch diameter tapering to a sharp point) is affixed to a mounting assembly 218 which is in turn fixed with respect to the rotational axis of roller 212 (both may also be fixed with respect to the overall frame of the apparatus) so as to maintain the point of the corona discharge electrode 216 at a fixed predetermined distance away from the surface of the insulated wire 206. In the preferred exemplary embodiment, this distance is on the order of 0.125-0.25 inch or more (but preferably not more than about 1 inch). Closer spacing than 0.25 inch may make the process more susceptible to "streaking" of applied charge dots or areas and also more susceptible to mechanical contact with the measured surface, require excessive control of dimensional tolerances, etc.

At a point exactly 3 feet downstream, an electrostatic charge sensing electrode 220 (e.g. possibly a ring or linear conductor having a "width" on the order of 1/4 of the diameter of wire to be measured) is disposed and connected to an electrometer input so as to provide the requisite output signal on lines 116 and 116a in FIGURE 5 each time a previously marked area of the insulated surface passes thereby. In the preferred exemplary embodiment, the mark/sense electrodes and tachometer roller are all mounted within a measurement tunnel 222. If the tunnel is metallic, it may itself serve as a reference or ground electrode (together with the center conductor 202 of the wire) for both the electrostatic marking electrode 216 and the electrostatic sensing electrode 220. Alternatively and/or in addition, the sense electrode 220 can be substantially surrounded or otherwise associated with one or more reference or ground electrodes so as to give the electrometer input a reference potential against which induced charge on the ring electrode 220 can be measured.

The details of mechanical apparatus (e.g. tunnel 222, tachometer roller 212, corona discharge electrode 216, mounting assembly 218, sensing electrode 220 and other related electro/mechanical details of the transducing assemblage for the presently preferred exemplary embodiment are shown in FIGURES 7, 8, 9 and 9-1.

The pointed corona discharge electrode may have either a positive or negative polarity with respect to ground or reference potential (e.g. of the wire center conductor 202 and/or of the surrounding metallic tunnel 222 or reference electrodes or the like); however, a negative charge on the pointed corona discharge electrode is preferred. Although corona occurs at a lower voltage differential for positive polarity, such corona (from Townsend electron avalanche) is initiated by free electrons remote from the tip. This is a statistical occurrence which involves some variability for short pulse lengths. A negative polarity for the pointed electrode, on the other hand, first produces field emission from the pointed tip of the electrode which does not have such statistical variabilities associated therewith. Accordingly, a more stable, predictable and thus preferred charge deposit occurs when using a pointed discharge electrode that is of a negative polarity with respect to the reference voltage.

A suitable drive circuitry for the pointed corona discharge electrode is shown in FIGURE 13. Here, upon receipt of a marking signal from the control circuitry, a line driver 900 triggers a 50 microsecond monostable which, through a driver amplifier 904 excites a conventional automobile spark coil autotransformer 906 which drives the pointed corona discharge electrode 216 to a corona producing high voltage of negative potential with respect to a reference or ground voltage as shown in FIGURE 9. The final stage of driver amplifier 904 may, for example, comprise a transistor type MJ10004 or a transformer coupled transistor amplifier connected to drive a high voltage coil through conventional impedance matching circuits. Much of the circuitry shown in FIGURE 13 can also be realized by utilizing a conventional packaged transistorized automotive ignition system which may itself may include a suitable monostable, driver amplifier and spark coil as should be appreciated.

The electrostatic mark sensing transducer 220 works according to the known principles of electrostatic charge induction. That is, assuming a negatively charged area or dot previously applied by the marking transducer, as the charge dot moves into proximity of the sensing electrode, an opposite polarity (positive) charge is induced on the surface of the sensing electrode. If connected to an electrometer having a perfect infinite input impedance, a simple pulse output from the normal reference level output of the electrometer could be expected.

However, because actual electrometer circuits do have finite input impedances, this idealized pulse output is, in essence, differentiated so as to produce a doublet output which comprises a first pulse in one direction (at the leading edge of the expected idealized simple pulse) and a subsequent opposite-going pulse (at the trailing edge of the expected idealized simple pulse). In between, the output of the electrometer will pass through the zero or reference level and the detection of such a zero crossing point might, for some purposes, be utilized as an approximation of the actual measurement time at which the center of the electrostatically marked area 120 actually passes beneath the center of the ring electrode 220. For example, a threshold detector could be utilized to detect the onset of the first half of each doublet by setting a flip-flop which could then be reset by detecting the next subsequent zero crossing point and the resultant set/reset transition of the flip-flop circuit output can be utilized as the signal indicating the passage of another increment L of measured length. However, in the presently preferred exemplary embodiment it has been noted that the zero-crossing does not occur until somewhat later than the actual "center" of the passing charge dot or area. Accordingly, in the preferred embodiment, special steps are taken to detect the center by detecting a point somewhat prior (in time) to the zero-crossing point.

For example, one suitable sense transducer detecting circuitry is shown in FIGURE 14 for the "zero-crossing" detection embodiment. The sense electrode 220 drives a high input impedance (e.g. resistive input of approximately 20 meghoms and input capacitance of approximately 10 pf) electrometer 1000. This electrometer may have an overall voltage gain of about 20, for example, and may be realized by simply cascading two conventional operational amplifiers, the first of which is connected as a voltage follower having a high input impedance and the second of which is connected as an inverting amplifier having a gain of about 20. The output of the electrometer 1000 is a doublet as previously described because of the finite input impedance. Negative-going threshold detector 1002 then sets flip-flop or latch 1004 whenever the onset of the first half, negative-going doublet is detected. The subsequent zero crossing is then detected by the zero crossing detector 1006 to reset flip-flop 1004. The resulting negative going transition at the Q output of flip-flop 1004 is utilized to trigger a negative-going edge-triggered monostable 1008 whose output can then be conventionally coupled via a line driver 1010 to digital control circuitry as shown in FIGURE 14.

The preferred detector embodiment of FIGURE 15 uses the same high input impedance electrometer to drive a conventional peak follower 1100. The output of the peak follower is (after any desired level adjustment) compared to the real-time doublet signal at 1102 which is set to change state whenever the doublet signal falls a predetermined amount (e.g. 10%) from its peak value. To help eliminate spurious detections, comparator 1104 compares the doublet signal to a preset level (e.g. 1 volt) and enables comparator 1102 (only if that level exists) to trigger monostable 1108 (which also resets the peak follower via transistor 1106). Operation of the monostable and subsequent circuits is the same as already described for the circuit of FIGURE 14.

The electrostatic mark/sense gauge of the exemplary embodiment is fully operative only at higher line speeds. For example, because the surface conductivity of the insulated wire 206 is imperfect (and actually varies according to surface moisture, surfactants, etc.), the applied electrostatic charge will gradually diffuse over the surface or otherwise be disseminated so as to no longer present a well defined area or dot of electrostatic charge which can be reliably sensed by the sense electrode. Furthermore, if the center conductor 202 of the insulated wire is not referenced to ground or another reference potential, common mode noise signals may be generated that give rise to spurious mark sensor detector outputs. Such common mode noise is especially noticeable if the wire is permitted to flex within the vicinity of the sense electrode so as to depart from its intended path of travel. Accordingly, the preferred exemplary embodiment includes physical positioning elements which attempt to keep the traveling material centered within the length measurement system or otherwise fixed relative to the electrostatic transducing electrodes.

It is not necessary for the charge induction sensing electrode 220 to actually literally completely surround (i.e., in a closed path) the intended path of the material to be measured and for practical manufacturing reasons it is not presently done although the presently preferred embodiment does substantially surround the intended path of travel as will be seen. However, it may for some cases be preferred. Firstly, it is conceivable that over the distance L between the marking transducer and the sensing transducer, the material may rotate through some angle thus causing an angular misalignment between a sensing electrode and the mark to be sensed unless the sensing electrode substantially surrounds the surface of the material to be measured. Secondly, and somewhat related, it may be preferred to substantially surround the wire with a sense electrode so as to maximize signal strength and minimize common mode noise problems and the like. The detector tunnel 222 should also preferably completely encompass the charge deposition and sensing electrodes so as to minimize external noise pickup.

It is preferred that the pointed end of the corona discharge electrode 216 be about 0.25 inch away from the insulation surface for smoother charge deposition. It is also preferred that the wire surface not be backed up by a roller or the like directly at the corona discharge electrode (or at any point downstream thereof until just past the sensing electrode) since it has been observed that such a roller may make the charge deposition/sensing process erratic (possibly due to charge transfer occurring about the wire surface under influence of the contact with the roller).

As earlier mentioned, it is also preferred to minimize the flexing of the material surface (especially at the electrostatic electrode sites). Preferably, support rollers in both the horizontal and vertical directions for the wire or other material to be measured be provided just before the charge deposition electrode and just after the charge sensing electrode so as to minimize oscillations or flexing of the material surface at these critical points.

The material surface should preferably be dry and to help insure this condition, one or more air wipes (possibly including a hot air blast) should be provided somewhere near the entrance to the measurement tunnel. In the exemplary embodiment of FIGURE 6 where insulated wire lengths are being measured, it has also been found important to keep the wire core 202 at a controlled reference or ground potential. For example, capstan tension rollers or the like directly in contact with the bare center conductor 202 can be utilized to ground the center conductor to a reference potential.

As shown in FIGURES 8 and 9, the tunnel 222 is preferably formed in two separable portions that are hingedly connected at 400 so that the tunnel may be opened to permit easy entry of the insulated wire 206 without the need to thread an open end thereof through the tunnel. To maintain the tunnel in its normal closed position, a latch (e.g. magnetic as shown in FIGURE 8) 402 is preferably employed.

Self-centering rollers 404 are employed on either end of tunnel 222 to automatically keep the insulated wire 206 centered horizontally within the tunnel. Vertical adjustments of these self-centering rollers may be made through adjustment screws 406 which rotate the rollers 404 about a mounting hinge point 408.

Occasionally during wire manufacturing processes, a knot or other oversize section of material will be presented to the length measurement system. Accordingly, an automatic opener for tunnel 222 is provided in the form of a roller 300 mounted in the upper portion of the hinged tunnel assembly. Whenever an oversized section of material presents itself, it will contact the roller 300 and automatically force the tunnel 222 to separate at its magnetic latch 402 and to open by rotation around hinge 400 so as to thus harmlessly open the tunnel rather than to risk permanent damage by the oversized section of material. Roller 300 may also be used to bias the wire into contact with the tachometer roller.

The tunnel 222 is preferably formed of a conductive material (e.g. steel) and the whole assemblage is mounted upon a steel stand or housing 302 designed to place the tunnel assembly 222 at approximately the correct vertical height above the floor of a manufacturing facility for the particular product whose length is to be measured. The frame 302 may also include, for example, associated self-contained components 304, 306, 308 such as the electrical control and display panel and chassis (shown as dotted lines at FIGURE 8), a model identification plate or the like, a power supply unit, etc. as should be appreciated.

The sense electrodes 220 and surrounding reference electrodes may, if desired be formed from printed circuit board materials using printed circuit construction techniques. These electrodes may be formed in two separable pieces, as shown, corresponding to the separable pieces of the tunnel 222. They may also be physically conformed into approximately semi-cylindrical corresponding sections if desired. The printed circuit conductive area may be selectively etched away on either side of the sense electrode 220. Thus, when the tunnel 222 is in its closed position, a substantially encompassing sense electrode 220 is defined. Similarly, the rather larger conductive areas remaining on either side of the sense electrode 220 form reference electrodes. (When the tunnel 222 is in its normally closed position, these reference electrodes may also be of substantially cylindrical shape albeit of considerably longer axial dimension than is the sense electrode 220). The reference electrodes are electrically connected in parallel to a ground or reference potential (e.g. as is the metallic tunnel 222, the housing 302, the center conductor of the wire 202, etc.). The two halves of the sense electrode 220 are electrically connected in parallel to the input of the sense detector circuits shown in FIGURE 14.

The presently preferred embodiment of the electrostatic transducer is shown at FIGURES 9 and 9-1. It includes two large horizontal conductive plates 500, 502 (e.g. about one foot square) which are used as reference electrodes for the electrometer input. A narrow (e.g. 0.125 inch) linear sense electrode 220 is formed within or on top of a surrounding cut or etched area 506 filled with an insulating material in the reference electrodes 500 and 502. The lower plate is preferably fixed with respect to the axis of a downstream (e.g. a few inches) roller 508 (disposed within an aperture of electrode 500) so as to accurately space (e.g. by 0.125 inch) the sense electrode 220 from the measured surface which is, in turn, biased (e.g. by weight or opposed roller 510, etc.) into contact with roller 508. The whole assembly is preferably housed in metallic tunnel 222.

Although completely hard wired special purpose electronic control circuitry could be used to implement this invention, the presently preferred exemplary embodiment comprises a microprocessor based system of electronic control circuitry as will now be described in conjunction with FIGURES 10-12.

The front panel of operator controls and displays is shown in FIGURE 10 for the preferred exemplary embodiment. An eight digit numeric display 600 is utilized for displaying the data stored in various memory circuit registers as selected by the display selection control 602. For example, the running length measured during a given measurement run can be displayed, the speed (in either feet or meters per minute) can be displayed, the actual total length measured in all measurement runs since last actuation of the key-operated reset switch 604 can be displayed or the length of the last measurement run can be recalled and displayed. Furthermore, switch 606 permits the running length measurement to be displayed in either an up-counting or down-counting mode (from a preset final limit length) as the operator may prefer for given applications.

A given measurement run is initiated by operator actuation of the start count switch 608 which automatically adds (or subtracts in the down-count mode) a preset "offset" length (input via the "preliminary limit" rotary thumbwheel switches 610 as explained hereafter) to the running length register. (The preset offset distance may represent, for example, a fixed starting length labeled "offset" in FIGURE 6.) The running length is then displayed at 600 (in either up- or down-counting mode as selected by the operator) until the operator actuates the stop count switch 612 which acts to reset the running length register and therefore the display 600 to zero.

To give the operator some advance warning of the impending end of a measurement run, a "preliminary limit" distance is entered via thumbwheel switches 610. The final limit of a given measurement run is entered via thumbwheel switches 614. As the running length measurement comes within the preset preliminary limit of the final limit, a light indicator 616 is lit so that automatic or operator initiated steps can be taken to slow down the line, cut the wire, mark the wire or otherwise bring the measurement run to its desired conclusion at the preset final limit. The stop count switch 612 is actuated before beginning a new measurement run.

The offset amount entered via the preliminary limit thumbwheel switches 610 is added (or subtracted for down-counting mode) to the running length register whenever the start count switch 608 is actuated. It represents the length of material between the actual start point of the length measurement system and a takeup spool or the like which has effectively already passed through the length measurement system at the initiation of a measurement run. This will often be a fixed number for a given wire manufacturing line or for any given related sequence of measurement runs. Accordingly, it is normally entered by actuation of a relatively inaccessable (e.g. accessible behind the front panel) switch 700 shown in FIGURE 11. If switch 700 is switched to the "on" position and if toggle switch 702 is placed in the "test" condition, the number entered into the preliminary limit thumbwheel switches 610 can be loaded into the offset register in memory circuits by actuation of the load offset push button 704 shown in FIGURE 11.

The mode lights 618 shown in FIGURE 10 are simply for the purpose of reminding the operator as to the current modes of operation. For example, operation can be in either English or metric units as selected via switch 706 in FIGURE 11. The appropriate mode light 618 will reveal the current selection to the operator at all times. The local/remote operation mode is similarly selected via switch 708 and displayed via the appropriate mode light 618 should be apparent. (Remote mode is used only when the unit is being remotely controlled over a data communication channel. For example, the totalized reset, start count, reset count, preliminary limit, final limit and offset data and/or control functions can be entered from a remote point if desired and all normally availble output data can be transmitted to a remote site on request as will be discussed in connection with FIGURE 12.) The failure mode light 618 will be lit if for some reason there is no sensed tachometer input but there is continuing input from the mark/sense length gauge. Since, in the exemplary embodiment, length measurement depends on reliable tachometer inputs, this condition would indicate a failure mode. The test mode light 618 is energized whenever toggle switch 702 is placed in the test mode. As shown in FIGURE 11, switches 710 can be utilized for selecting the desired baud rate for communication to/from a remote control unit.

In addition to the registers of accumulated length-related data already discussed, the preferred exemplary embodiment maintains three additional registers of accumulated data in its memory circuits:

1. the number of detected electrostatic pulses (i.e. doublet signals from the electrometer) which occur within an expected time window defined by counting tachometer pulses during the just previous complete measurement run;

2. the number of missing doublet signals (i.e. the number of expected time windows in which no doublet is detected) during the just previous complete measurement run; and

3. an excessive doublet count (i.e. all detected doublets whether or not occurring within the expected time window) for the last complete measurement cycle.

These three registers containing data representing the valid, missing and excessive doublet counts are selectable for display in the test mode (entered via toggle switch 702) via switches 712, 714 and 716, respectively.

At least five diagnostic lights are also provided in the preferred exemplary embodiment as shown in FIGURE 11. These may be in the form of light emitting diodes, for example, and relate to various instantaneous ongoing statuses of the equipment to aid in diagnosing and trouble shooting of the system.

The presently preferred exemplary embodiment of microprocessor based electronic circuitry for use in the exemplary length measurement system is shown at FIGURE 12. The basic overall architecture of the microprocessor system shown in FIGURE 12 is fairly typical in that it includes a microprocessor 800 (e.g. Intel 8085) connected to various outboard memory chips and input/output ports via address/data bus 802 and control bus 804. Typically, the eight least significant bits of the address are latched with address latches 806 (e.g. latch type 8282) so as to permit these same lines ADØ-AD7 to carry an eight bit data word onto the address/data bus 802 without losing the eight bits of address information previously transferred to the latches 806. The EPROM 808 comprises several separate sections (e.g. four Intel 2716 circuits each providing 2,000 words of memory) and a memory select decoder 810 (e.g. Intel 3205) is utilized to permit selection of particular sections of the EPROM 808 as should be apparent to those familiar with microprocessor based circuits. The random access memory is preferably a CMOS type of memory (e.g. two Harris type 6514 circuits providing a total of 1,000 words of memory) which is utilized with a conventional "watch dog" memory protection circuit 814 to trap desired data in the RAM 812 in the event of power failures or the like, thus making the RAM 812 a relatively nonvolatile memory unless, of course, the internal nickel cadmium battery source for the watch dog memory protection circuit itself somehow becomes discharged. The read and write enablement of EPROM 808 and RAM 812 should be substantially self-explanatory to those in the art from FIGURE 12.

The various input switches and output displays depicted in FIGURES 10 and 11 are controlled and accessed by microprocessor 800 through I/O ports 816 and 818 (e.g. two Intel 8255 circuits providing three eight bit I/O ports each) and an I/O select decoder 820 (e.g. Intel 3205). As shown at FIGURE 12, the two least significant digits of port PC in I/O 816 are utilized to provide "start" and "enable" signals respectively to OR gate 822 and to AND gate 824. When the read transducer of FIGURE 14 detects a proper doublet signal, it will be coupled via traditional line termination circuitry 826 to another input of AND gate 824. If the enable signal is also present (during an expected time window determined by counting tachometer input signals as will be later described), this signal is automatically passed through gates 822 and 824 and conventional line driving circuitry 828 to trigger the marking transducer circuitry shown in FIGURE 13. That is, if a doublet is detected within its expected time window, it will automatically retrigger the marking transducer without the need for further information processing by microprocessor 800. Accordingly, no significant data processing delay is encountered in retriggering the marking transducer and thus the inherent accuracy of the mark/sense length gauge is maintained.

At the same time, successful detection of a doublet causes a signal to be passed over line 830 to the INT6 interrupt which, through OR gate 832 is connected to edge interrupt 7.5 of microprocessor 800. In this manner, the microprocessor is interrupted by the occurrence of any detected doublet (whether within or without the expected time window) and, under program control described hereafter, causes appropriate data registers in the memory circuits to be updated.

The start signal input to OR gate 822 is generated by microprocessor 800 under program control upon activation of the start count switch 608 already described.

Port PA of I/O port 816 is used to drive the eight digit display 600 via a conventional eight bit latch/driver 834 (e.g. two integrated circuit type 74LS170). The display 600 is asynchronously updated via clock 836 which drives counter 838. The output of the counter is used to address the latch/driver 834 and also to drive decoder 840 which, in turn, addresses the eight digit display 600. The output of the decoder 840 is also used to address six LED annunciators 618 (i.e. the six mode lights shown in FIGURE 10) and the data used to determine the status of these annunciators is provided via port PB of I/O port 816.

The lower four digits of port PA in I/O port 818 are utilized to receive input data from the six digit thumbwheel switches 614, the display mode switches 602 or the various operational switches 604, 606, 608 and 612. Selection of these various switches (e.g. via diode gates) is controlled by decoder 842 (e.g. Intel 3205) which is driven by the lower four digits of port PB of I/O 818.

The higher order four digits of port PA in I/O 818 are utilized for receiving data from the four digit thumbwheel switches 610, the operational mode switches 702, 704; the test display/mode select switches 700, 706, 708, 712, 714, 716 and/or the baud rate select switches 710. Again, activation (e.g. via diode gates) of particular ones of these switches for use at any given time is achieved through decoder 842 driven by the lower order four digits of port PB in I/O port 818.

A three-section programmable interval timer 844 (e.g. PIT 8253) is utilized for three separate functions. The first section is connected to receive a clock signal from microprocessor 800 (actually divided by two) and to provide an output clock on line 846 that has a rate equal to 16 times the baud rate selected at switches 710. This and the undivided clock frequency signal from microprocessor 800 together with an appropriate select signal from decoder 820 are all input to UART 848. The purpose of UART 848 is its conventional function of converting parallel data to serial form or vice versa. The serial data may appear in either input or output form on lines 850 in EIA standard RS232 format or on lines 852 in a conventional 20 milliampere current loop format. UART 848 is also connected to the INT 1 and INT 2 terminals which, through OR gate 854 provide a level interrupt 5.5 to microprocessor 800. As will be understood by those skilled in the art of microprocessor circuitry, such interrupt signals are utilized to properly coordinate the parallel/serial and serial/parallel conversion processes of UART 848 under appropriate program control of microprocessor 800. This remote input/output ability may be used to realize the remote control functions earlier discussed.

The second section of the programmable interval timer 844 is utilized as a simple 1-second timer for purposes of calculating speed data for the measured material. In particular, the frequency divided clock signals from microprocessor 800 are input to the CLK1 clock terminal and an output is used to set the latch 856. The Q output of latch 856 is made available to the microprocessor 800 via the PB4 terminal of I/O port 818 while the latch 856 can be reset by microprocessor 800 via port PB5 of I/O port 818. The number of incoming tachometer pulses are counted during each successive 1-second interval, as defined by the second section of the programmable interval timer, and a speed calculation in either feet or meters per minute is then made by microprocessor 800 and the appropriate speed register is updated for selective display under operator control as should now be apparent.

A conventional tachometer (e.g. Accu-Coder model 711 manufactured by Encoder Products Co.) is utilized to provide a predetermined nominal number of pulses per increment of measured length (e.g. 3600 for 36 inches). This conventional tachometer train of input pulses is input via a conventional line termination 858 to the clock terminal CLK2 of the third section of the programmable interval timer 844. The output of this third section timer is then used to set latch 860. The Q output of latch 860 is made available to microprocessor 800 via port PB6 of I/O port 818 while latch 860 can be reset by the microprocessor 800 via port PB7 of I/O port 818. It should be recognized that this third section of the interval timer can be programmed, for example, to count any desired number of input tachometer pulses before providing an output pulse at terminal OUT2. In the preferred embodiment, 120 pulses are nominally counted between outputs but that number can be modified so as to correct for detected tachometer inaccuracies.

It should also be noted in FIGURE 12 that the Q output of latch 856 is connected to the INT4 terminal and the Q output of latch 860 is connected to the INT3 input terminal of OR gate 862. This gate output is, in turn, connected to the 6.5 level interrupt of microprocessor 800. Accordingly, any time either latch 856 or latch 860 is set by its respective section of the interval timer 844, the microprocessor 800 is interrupted and via the appropriate connection of I/O port 818 is able to determine which one or both of the latches has been set and to take appropriate programmed action in response thereto.

The final eight digit port PC of I/O port 818 is utilized to drive remote indicator relays, the LED diagnostic annunciators 720, the preliminary limit light 616, wire cutting equipment, or any other desired external input/output devices.

If desired, plural charge detecting sensors can be selectively used at different separation spacings from the corona discharge electrode to control accuracy levels and/or to better accommodate different speed ranges. As should now be appreciated, the mark/sense length gauge of this invention can be used even when the material is sometimes slowed or stopped so that the last-applied charge dot "disappears" before reaching the sense electrode. This is because it will automatically be restarted by the tachometer input. Of course, this mark/sense gauge will for the same reason initially be automatically self-starting.

An exemplary microprocessor program is depicted by the flow charts in interrelated FIGURES 16-21. The basic executive routine is shown in FIGURE 16. There, upon start-up, all data registers, flags, displays etc. are initialized to appropriate starting values. Then the circuit statuses of the various operator controlled switches are read and stored at 1202 using the I/O ports 816 and 818, the RAM 812 etc. as should be apparent to those skilled in the art. Then, at 1204 the RUN/TEST subroutine is entered (FIGURES 17-18). Return is via the "housekeeping" block 1206 before another cycle of the executive routine is entered as shown. The "housekeeping" block encompasses typical conventional processes performed in microprocessor-based systems of this type. For example, various I/O subroutines controlling communication with a remote site via UART 848, data saving transfers to CMOS RAM 812 in the event of impending power failure, activation of appropriate annunciator lamps, remote elays or lights, setting of baud rate clock counter etc.

Of course, at any real time of occurrence, any of the interrupts INT1, INT2, INT3, INT4 or INT6 can occur in which case the ongoing programmed processes of FIGURES 16-18 are temporarily interrupted in favor of other programmed higher priority processes. The interrupt subroutines for INT3, INT4 and INT6 are explicitly depicted at FIGURES 19-21 respectively, INT1 and INT2 are conventional subroutines used to interface with UART 848 and are therefore not shown explicitly.

If the "test" mode is entered via the RUN/TEST subroutine, various doublet counts may be selectively displayed or offset input data may be received and stored as shown in FIGURE 17. In the normal "run" mode, the "start" and "stop" switch statuses are checked before entering the DISPLAY subroutine. As shown in FIGURE 17, if either of these push-button switches is "on", special actions are taken with respect to the final limit control (e.g. energize a cutting or marking relay, etc.) and to the data registers used to store current and last run length. New final limit target and offset data may also be entered into appropriate registers.

The DISPLAY subroutine of FIGURE 18 is entered from the RUN/TEST subroutine as just explained and causes an appropriate display on the front panel. If a "count down" mode of display is desired, an appropriate conversion can here be made for display purposes as will be apparent.

Whenever the requisite number of tachometer pulses have been counted an INT3 signal is generated causing entry to the INT3 subroutine shown in FIGURE 19. As there shown, a counter register NUMTN counts the number of accumulated tenths of units (e.g. tenths of feet since the last sensed charge dot). The second section of the programmable interval timer 844 is reloaded at 1502. The TOTLEN (total length) and LENGTH registers are also incremented as appropriate at 1504. The onset of the time "window" in which a sensed charged dot is to be expected is detected at 1506 (e.g. 35 NUMTN 36) and gate 824 is then enabled before exit. The conclusion of this "window" is detected at 1507 (in the event an INT6 has not already occurred) and an actual corona discharge "start" signal is then forced onto gate 822, the NUMTN counter is reset and the "missing doublet count" is incremented as shown.

The INT4 subroutine shown in FIGURE 20 occurs once each second. The one-second timer (section 1 of the interval timer 844) is reset at 1602 and the speed parameter is calculated and stored (for possible later display or usage) at 1604.

The INT6 subroutine shown in FIGURE 21 is entered each time an actual doublet signal occurs. If outside the expected time window (as tested at 1702), the "excess doublet count" register is incremented at 1704. If within the expected time window, the "valid doublet count" register is incremented at 1706. The length and total length registers are incremented appropriately and the NUMTN counter reset at 1708. The corona enable to gate 824 is also turned off at 1710. At 1712, the actual contents of the tachometer pulse counter at this time is sampled and accumulated over 10 cycles before being used to adjust the reseting value (TIME2) for this section of timer 844 so as to correct for tachometer inaccuracy. After each accumulation of a complete unit (e.g. one foot as tested at 1714), the running length measurement is tested against the preset preliminary limit at 1716 and, if appropriate, data flags and operator warning devices are set at 1718 so as to permit automatic or manual slowing of the line as the "final limit" is reached. When such a final limit is reached (as determined by the operator in this embodiment via the front panel display), the "stop count" switch is operated thus causing the termination of a run with the occurrences depicted and already explained with respect to FIGURE 17.

While only a few presently preferred exemplary embodiments have been explained in detail above, those in the art will appreciate that there are many possible variations and modifications of these exemplary embodiments that can be made without materially departing from the novel advantages and teachings of this invention. Accordingly, all such variations and modifications are intended to be included within the scope of the appended claims.

WHAT IS CLAIMED IS:

1. Length measuring apparatus comprising:

a first length gauge (24) nominally producing N first digital signals for each measured length L;

a second length gauge (14, 16) nominally producing a second digital signal for each measured length L;

a signal generator (20) producing a pseudo second digital signal in response to accumulated occurrences of said first digital signals in the absence of an actual second digital signal; and

a length register (22) for accumulating increments of measured length in response to occurrences of said first and second digital signals.

2. A length measuring apparatus as in claim 1 wherein said first length gauge comprises:

a velocity detecting means (24) with an electrical output having a detectable parameter corresponding to the velocity of material passing thereby;

measuring means (28) for measuring said detectable parameter of said electrical output and providing a ratio-modified electrical output having a ratio-related detectable parameter;

comparator means (22, 66,74) for comparing said detectable parameters of said electrical outputs; and

computing means (22, 68, 76) connected to respond to an output of said comparator means by correcting the rate modification effected by said measuring means so as to bring said detectable parameter of said ratio-modified electrical output into substantial equality with a unit length standard value determined by said second length gauge.

3. Length measuring apparatus as in claim wherein said first gauge comprises a tachometer (112) and said second gauge comprises a mark-writing transducer (114) actuated by a mark-sensing transducer (102) spaced therefrom by a distance equal to said measured length L.

4. Length measuring apparatus as in claim 1 wherein said signal generator comprises:

means (844) for counting minimum and maximum numbers of said first signals to define a time window during which the next occurrence of said second digital signal is expected.

5. Length measuring apparatus as in claim 2 comprising plural process velocity detectors (56, 58) providing signals having parameters proportional to process velocity.

6. Length measuring apparatus as in claim 2 for measuring the length of relatively moving material wherein:

said second gauge comprises a mark/sense length gauge (14, 16) nominally producing a first electrical signal each time a length L of material passes thereby by sensing a mark applied at a distance L upstream and applying another mark thereat in response to each such sensing;

said first gauge comprises a non-contacting velocity sensor (24) which, without directly contacting said material, provides Nc second electrical signals for each length L of material, where the number Nc may vary from time to time and a programmable ratio converter (28) connected to receive said Nc second electrical signals and to provide in response, N=RNc third electrical signals for each length L of material, where R is a programmable rate conversion factor set by an input rate conversion signal; and

said signal generator and length register comprise electronic control circuitry (22) connected to receive said first and third electrical signals and, in response, (1) to automatically restart said mark/sense length gauge if necessary, (2) to generate and supply said rate conversion signal to said programmable ratio converter, and (3) to accumulate an accurate reliable length measurement.

7. Length measuring apparatus as in claim 1 for measuring the length of relatively moving elongated material, wherein:

said first length gauge comprises a first measurement means (100) adapted to sense the relative passage of said material and to produce a first digital output signal (124) for each sensed passage of a first increment of material length;

said second length gauge comprises a second measurement means (102, 114) adapted to sense the relative passage of said material and to produce a second digital output signal (116a) for each sensed passage of a second increment of material length, said second increment of length being greater than a plurality of said first increments of length, said second digital output signal, when it occurs, being a more accurate representation of measured incremental length than said first digital output; and

said signal generator and length register comprising a digital data combining means (104) connected to receive and to combine both said first and second digital output signals and produce, in response, an accumulated digital length measurement having improved accuracy and reliability over that which would result from using either of said measurement means alone.

8. Length measuring method comprising:

producing approximately N first digital signals for each measured length L;

producing a second digital signal for each measured length L;

producing a pseudo second digital signal in response to accumulated occurrences of said first digital signals in the absence of an actual second digital signal; and

accumulating increments of measured length in response to occurrences of said first and second digital signals.

9. A method as in claim 8 wherein:

said producing N first digital signals step comprises marking and detecting marks on said surface at a known fixed distances L from each other, said marking being initiated by said detecting and said detecting providing a first electrical output from each length L passing thereby; and

said producing a second digital signal step comprises detecting the process velocity of said surface and providing a second electrical output having a detectable parameter corresponding to said process velocity, measuring said detectable parameter of said second electrical output and providing a ratio-modified electrical output having a ratio-related detectable parameter, comparing said detectable parameters of said ratio-related electrical output and said first electrical output; and responding to an output of said comparator means by correcting the rate modification effected by said measuring step so as to bring said detectable parameter of said ratio-related electrical output into substantial equality with a unit length standard value determined by said marking and mark detecting steps.

10. Length measuring method as in claim 8 wherein said second-mentioned producing step comprises writing a sensible mark on a measured material in response to sensing a previously written mark applied at a location spaced therefrom by a distance equal to said measured length L.

11. Length measuring method as in claim 8 wherein said third-mentioned producing step comprises:

counting minimum and maximum numbers of said first signals to define a time window during which the next occurrence of said second digital signal is expected.

12. Method as in claim 9 comprising plural of said detecting steps wherein process velocity detectors provide plural signals having parameters proportional to process velocity.

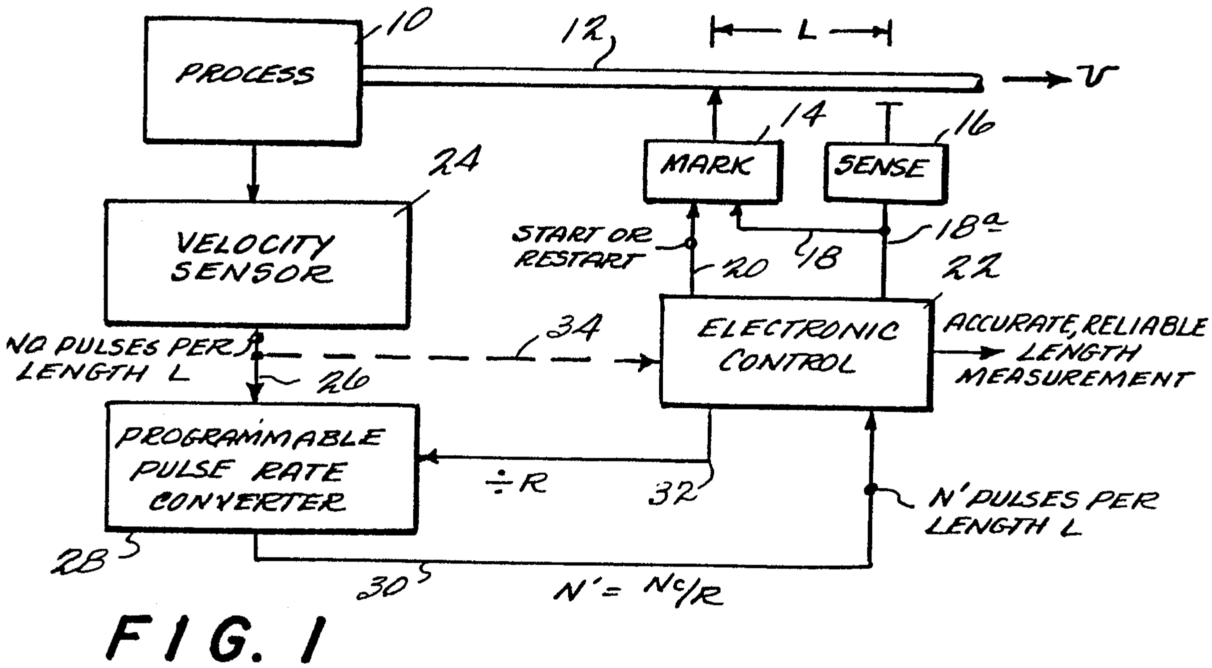
PROCESS
10
12
L
V
14
16
MARK
SENSE
24
VELOCITY SENSOR
START OR RESTART
20
18
18a
22
NO PULSES PER LENGTH L
34
ELECTRONIC CONTROL
ACCURATE, RELIABLE LENGTH MEASUREMENT
26
PROGRAMMABLE PULSE RATE CONVERTER
÷R
32
N' PULSES PER LENGTH L
28
30
N' = Nc/R

FIG. 1

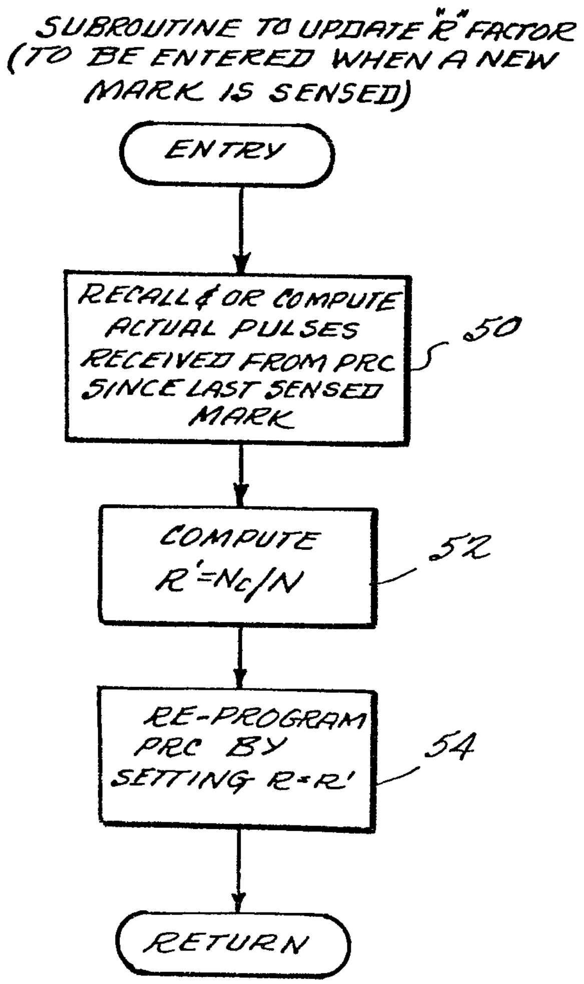
SUBROUTINE TO UPDATE "R" FACTOR (TO BE ENTERED WHEN A NEW MARK IS SENSED)
ENTRY
RECALL & OR COMPUTE ACTUAL PULSES RECEIVED FROM PRC SINCE LAST SENSED MARK
50
COMPUTE R'=Nc/N
52
RE-PROGRAM PRC BY SETTING R=R'
54
RETURN

FIG. 2

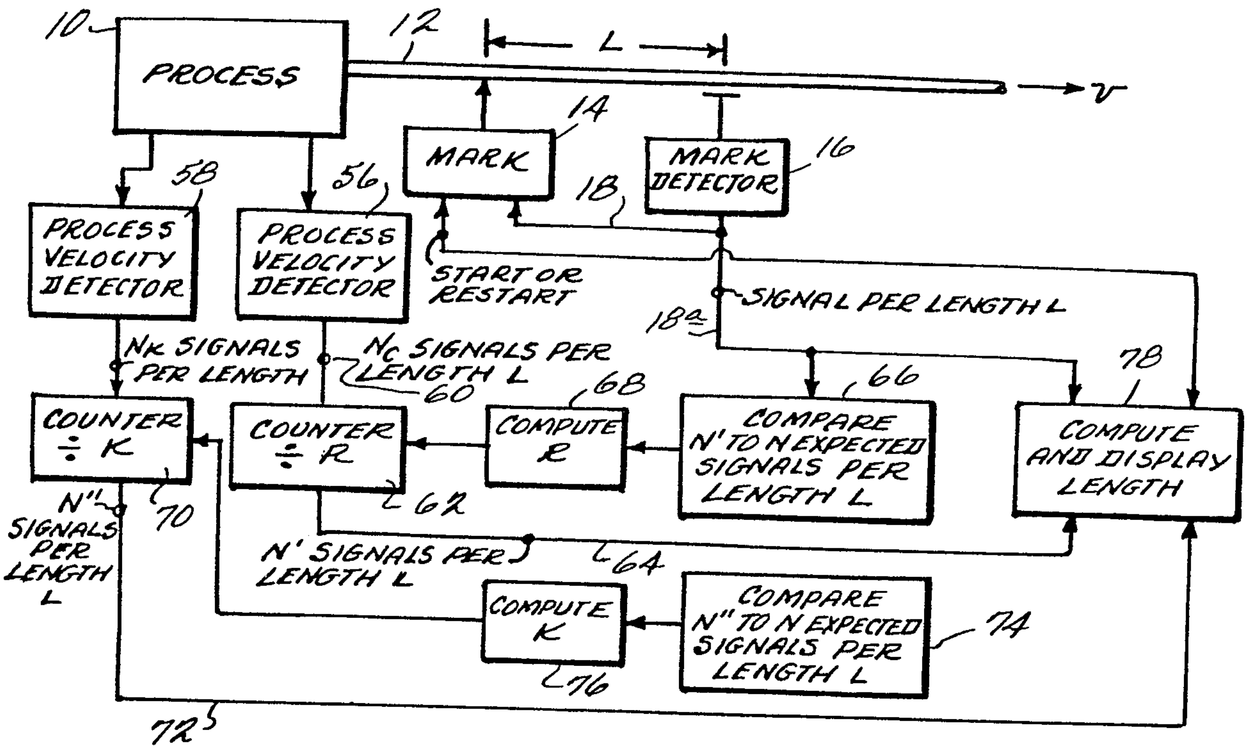

10
PROCESS
12
L
v
MARK
14
MARK DETECTOR
16
18
START OR RESTART
SIGNAL PER LENGTH L
18a
PROCESS VELOCITY DETECTOR
58
PROCESS VELOCITY DETECTOR
56
Nk SIGNALS PER LENGTH
Nc SIGNALS PER LENGTH L
60
COUNTER ÷ K
COUNTER ÷ R
COMPUTE R
68
COMPARE N' TO N EXPECTED SIGNALS PER LENGTH L
66
COMPUTE AND DISPLAY LENGTH
78
N" SIGNALS PER LENGTH L
70
62
N' SIGNALS PER LENGTH L
64
COMPUTE K
76
COMPARE N" TO N EXPECTED SIGNALS PER LENGTH L
74
72


FIG. 3

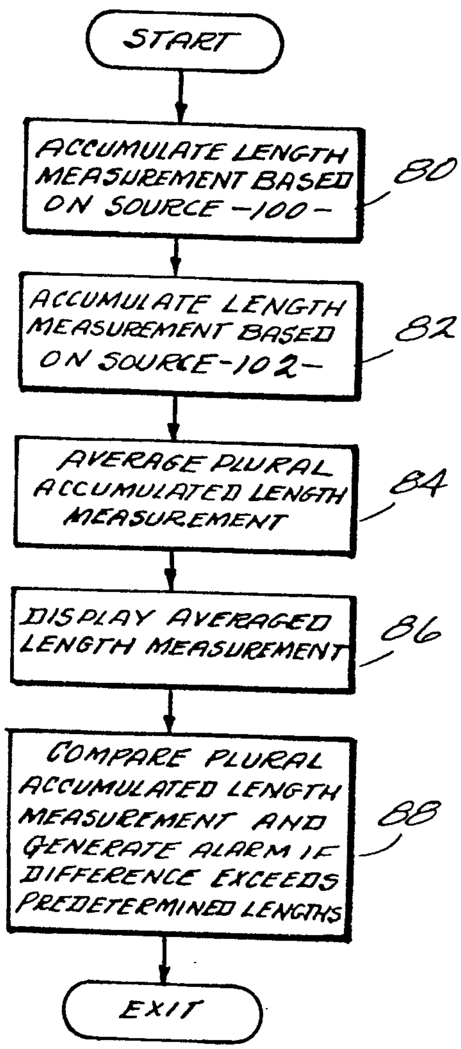

START
ACCUMULATE LENGTH MEASUREMENT BASED ON SOURCE -100-
80
ACCUMULATE LENGTH MEASUREMENT BASED ON SOURCE -102-
82
AVERAGE PLURAL ACCUMULATED LENGTH MEASUREMENT
84
DISPLAY AVERAGED LENGTH MEASUREMENT
86
COMPARE PLURAL ACCUMULATED LENGTH MEASUREMENT AND GENERATE ALARM IF DIFFERENCE EXCEEDS PREDETERMINED LENGTHS
88
EXIT


FIG. 4

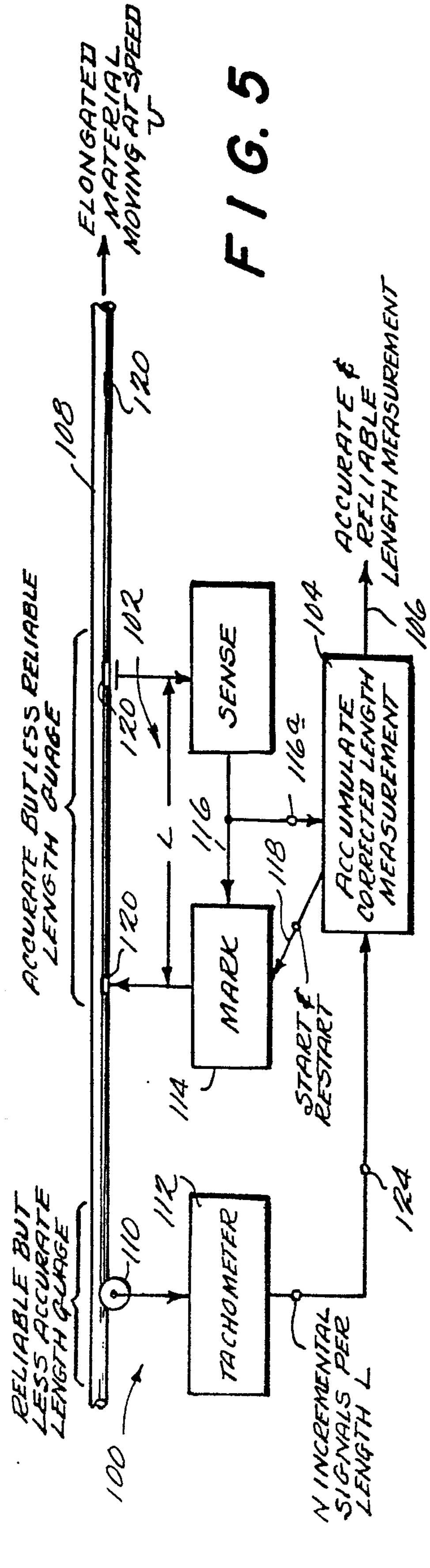
ELONGATED MATERIAL MOVING AT SPEED "V"
108
120
ACCURATE BUT LESS RELIABLE LENGTH GUAGE
102
120
SENSE
L
116
116a
120
MARK
118
114
START & RESTART
ACCUMULATE CORRECTED LENGTH MEASUREMENT
104
106
ACCURATE & RELIABLE LENGTH MEASUREMENT
RELIABLE BUT LESS ACCURATE LENGTH GUAGE
110
112
TACHOMETER
124
N INCREMENTAL SIGNALS PER LENGTH L
100

FIG. 5

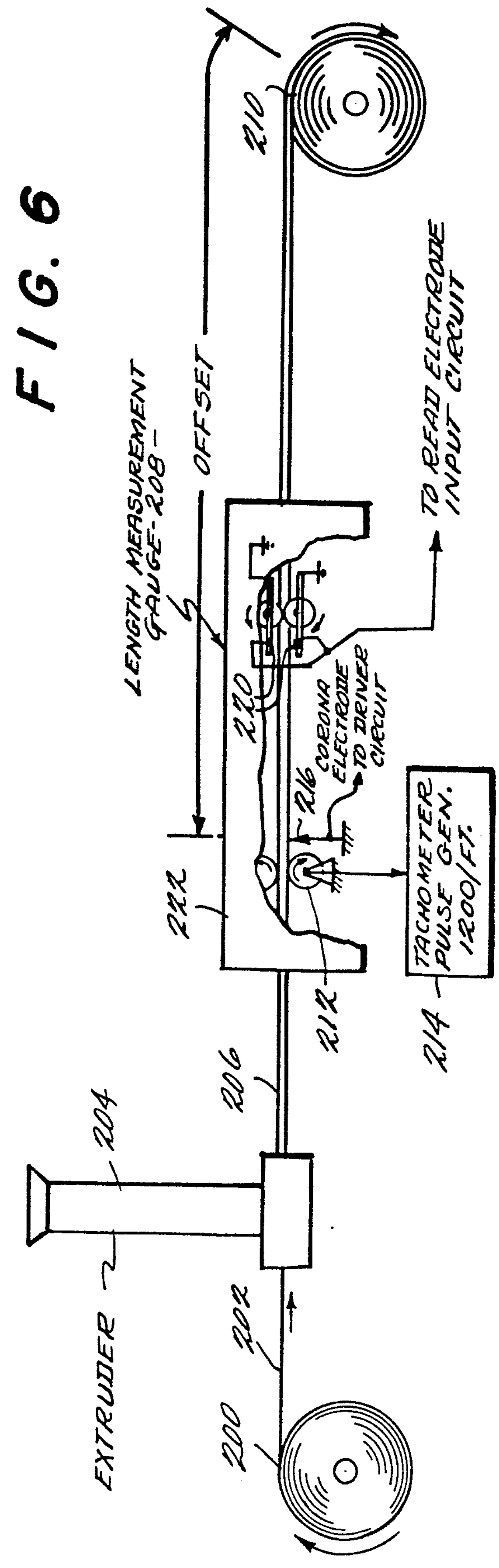
210
OFFSET
LENGTH MEASUREMENT GAUGE-208-
TO READ ELECTRODE INPUT CIRCUIT
220
216
CORONA ELECTRODE TO DRIVER CIRCUIT
222
212
TACHOMETER PULSE GEN. 1200/FT.
214
206
204
EXTRUDER
202
200

FIG. 6

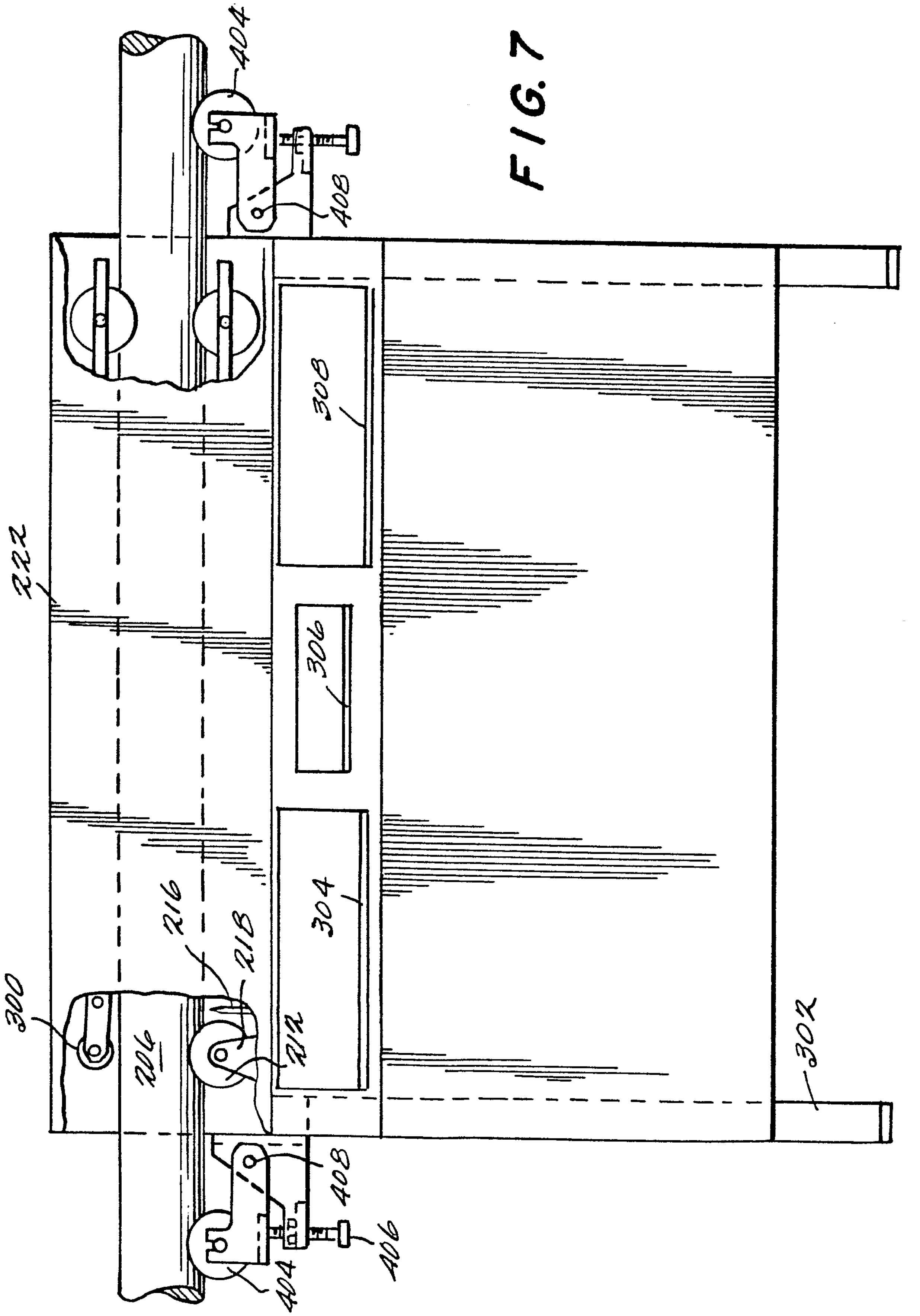


FIG. 7

FIG. 8

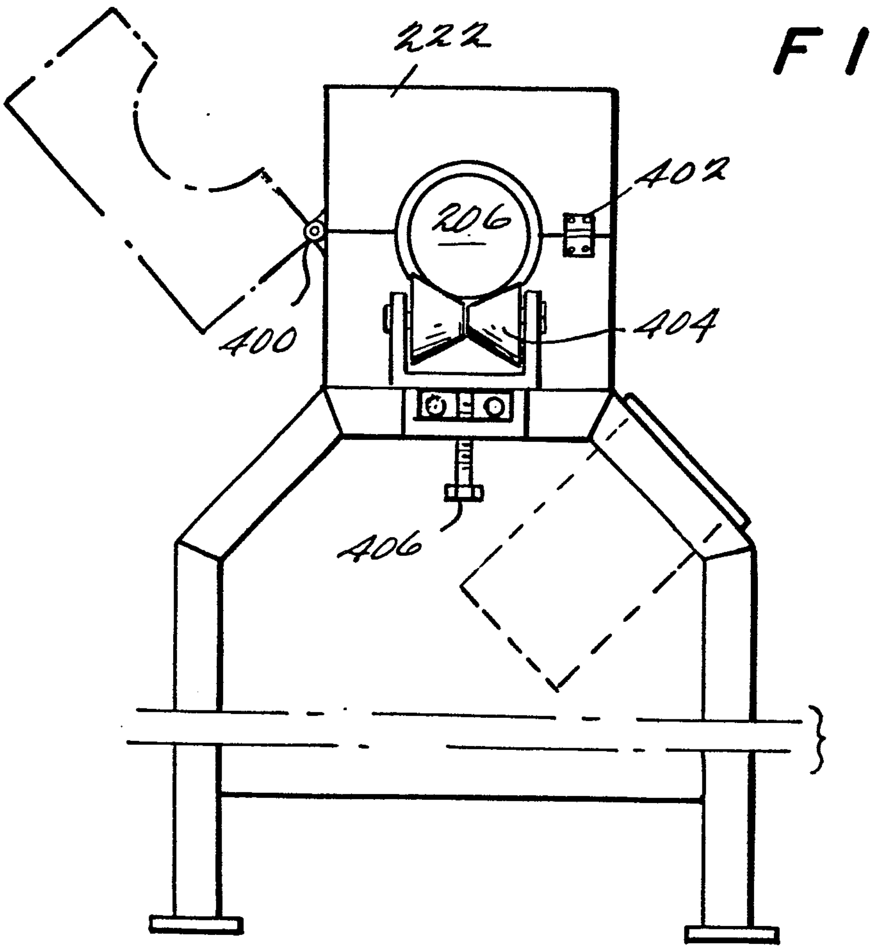


FIG. 9

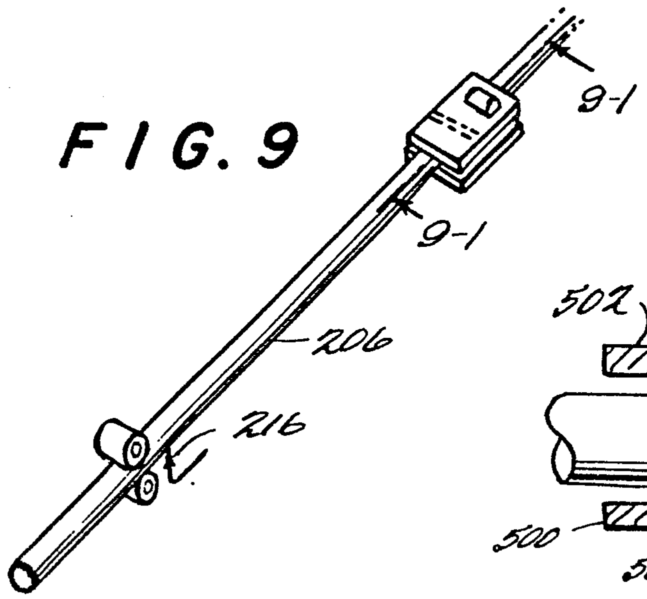


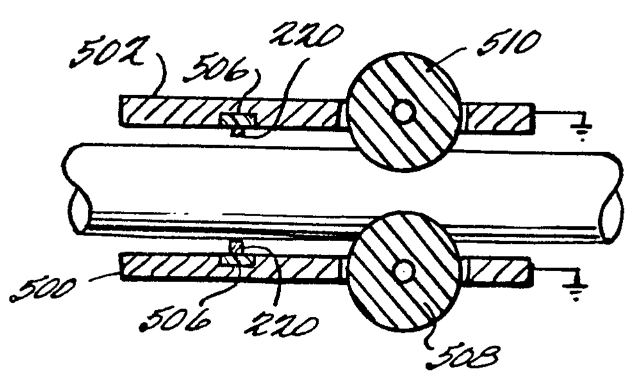


FIG. 9-1

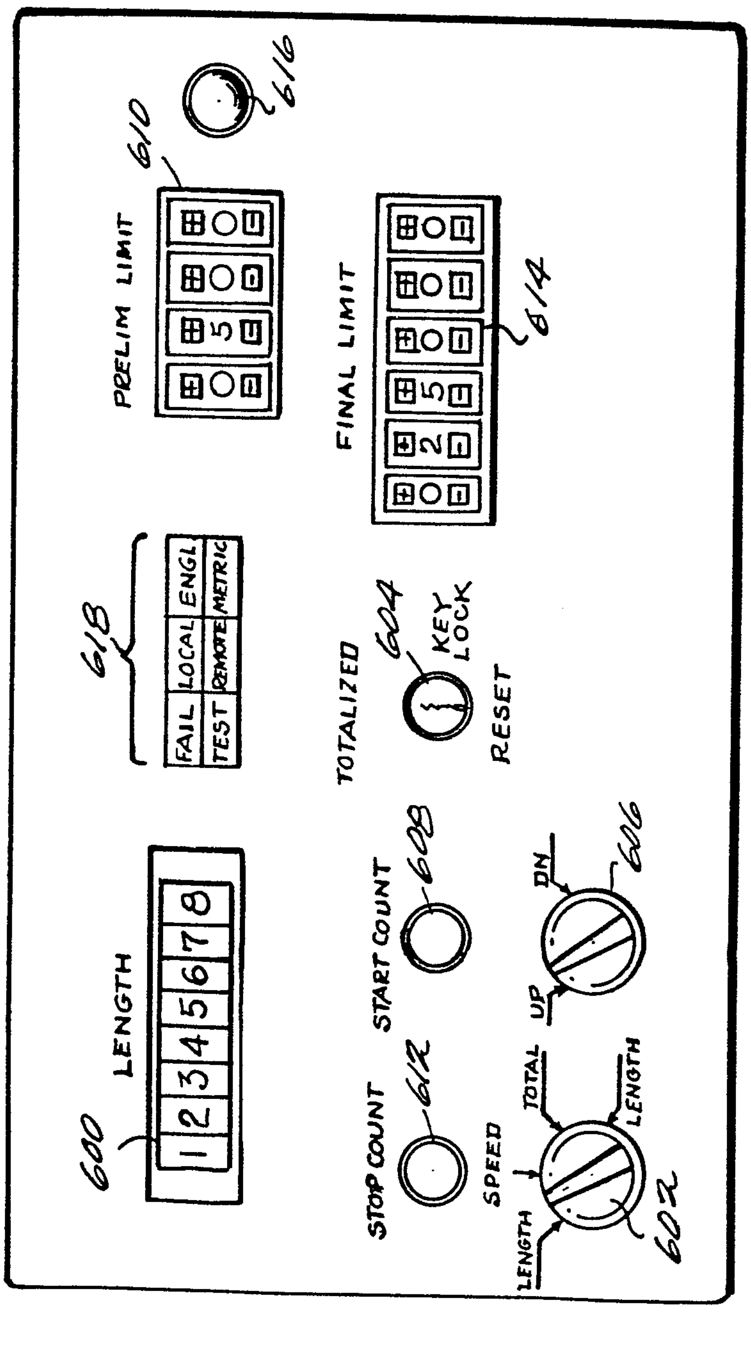
600
LENGTH
1 2 3 4 5 6 7 8
618
FAIL
TEST
LOCAL
REMOTE
ENGL
METRIC
PRELIM LIMIT
610
616
STOP COUNT
612
START COUNT
608
TOTALIZED
604
KEY LOCK
RESET
FINAL LIMIT
614
SPEED
LENGTH
TOTAL
LENGTH
602
UP
DN
606

FIG.10

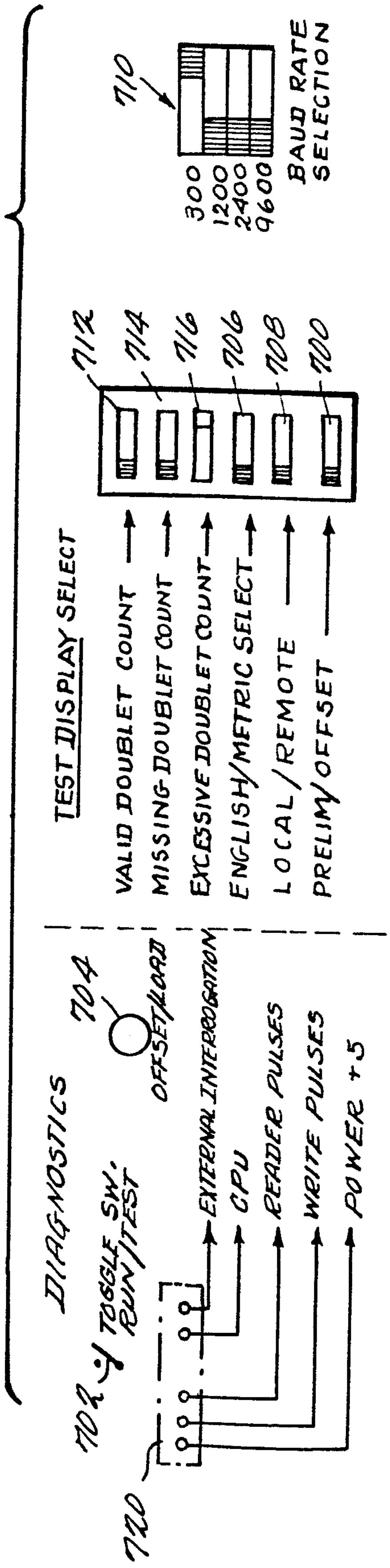
DIAGNOSTICS
702
TOGGLE SW. RUN/TEST
720
704
OFFSET/LOAD
EXTERNAL INTERROGATION
CPU
READER PULSES
WRITE PULSES
POWER +5
TEST DISPLAY SELECT
VALID DOUBLET COUNT
MISSING DOUBLET COUNT
EXCESSIVE DOUBLET COUNT
ENGLISH/METRIC SELECT
LOCAL/REMOTE
PRELIM/OFFSET
712
714
716
706
708
700
710
300
1200
2400
9600
BAUD RATE SELECTION

FIG.11

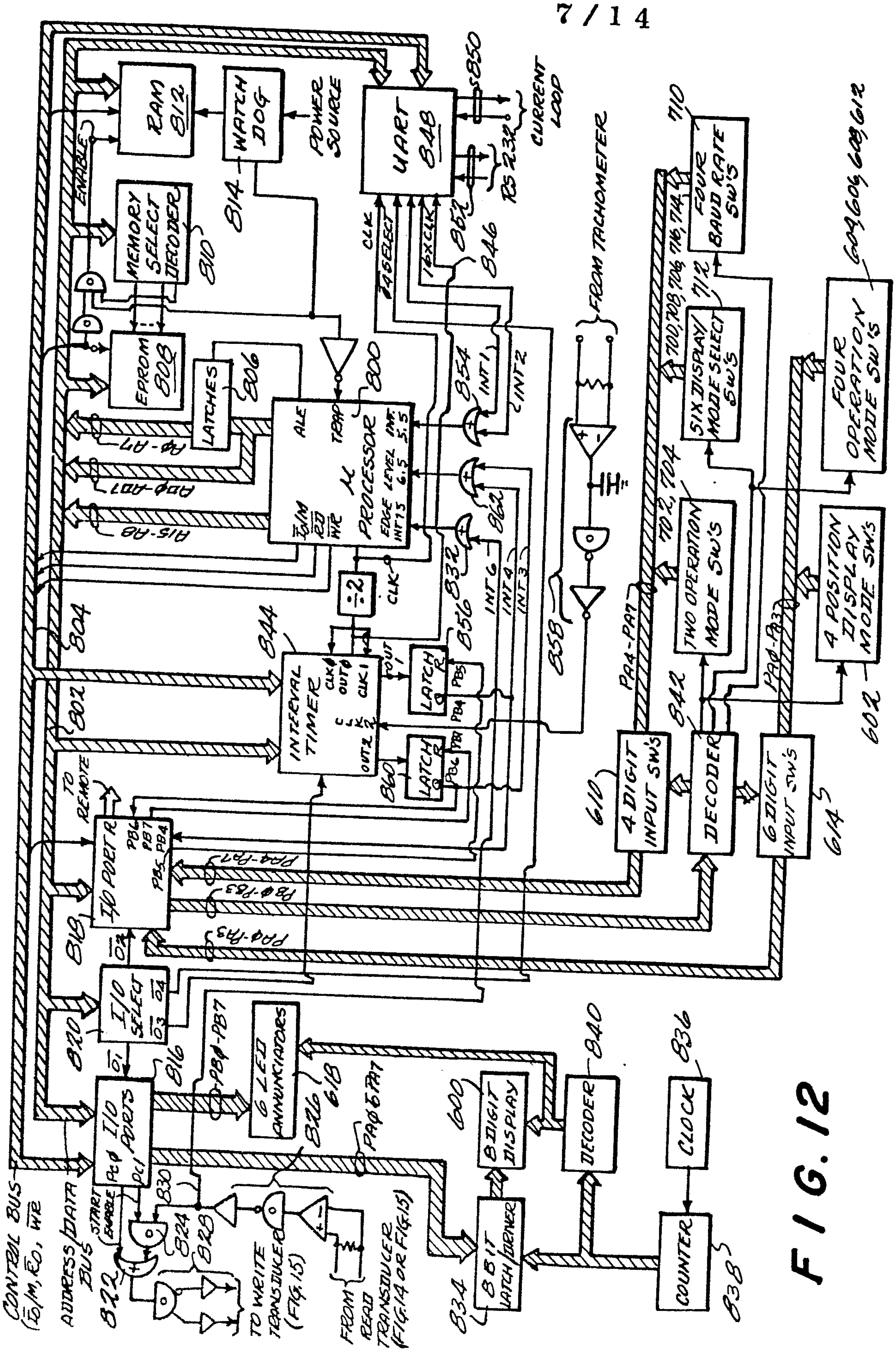
CONTROL BUS ($\overline{IO}$/M, $\overline{RD}$, $\overline{WR}$)
ADDRESS/DATA BUS
RAM 812
WATCH DOG
814
POWER SOURCE
UART 848
850
CURRENT LOOP
852
RS 232
846
MEMORY SELECT DECODER
810
ENABLE
EPROM 808
LATCHES
806
μ PROCESSOR
800
ALE
TRAP
INT1
INT2
854
862
INT6
INT4
INT3
832
856
CLK
÷2
A0-A7
AD0-AD7
A15-A8
804
802
INTERVAL TIMER
844
LATCH
860
858
FROM TACHOMETER
I/O PORT R
818
TO REMOTE
PA0-PA7
PB0-PB3
PA0-PA3
I/O SELECT
820
I/O PORTS
816
PB0-PB7
6 LED ANNUNCIATORS
618
826
PA0 & PA7
START
ENABLE
830
824
828
822
TO WRITE TRANSDUCER (FIG.15)
FROM READ TRANSDUCER (FIG.14 OR FIG.15)
8 DIGIT DISPLAY
600
DECODER
840
CLOCK
836
COUNTER
838
8 BIT LATCH/DRIVER
834
4 DIGIT INPUT SW'S
610
DECODER
842
6 DIGIT INPUT SW'S
614
TWO OPERATION MODE SW'S
702, 704
4 POSITION DISPLAY MODE SW'S
602
SIX DISPLAY/MODE SELECT SW'S
712
700, 708, 706, 716, 714
FOUR OPERATION MODE SW'S
604, 606, 608, 612
FOUR BAUD RATE SW'S
710

FIG. 12

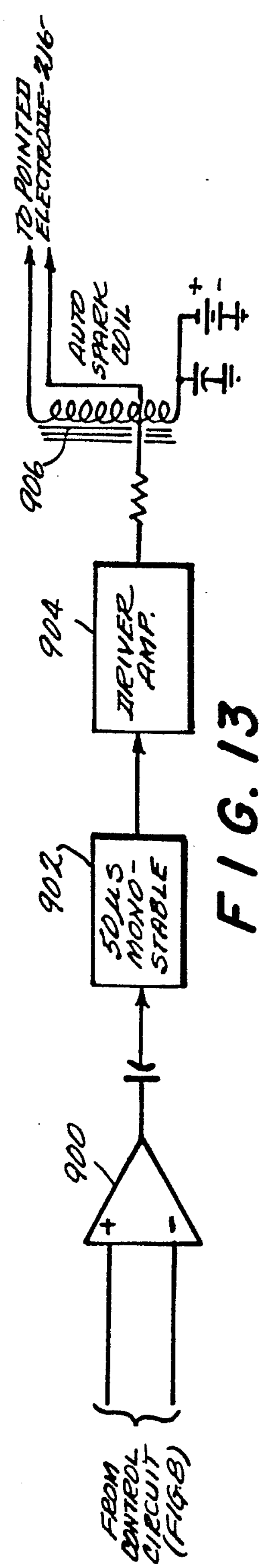

FROM CONTROL CIRCUIT (FIG.8)
900
+
-
902
50μS MONO-STABLE
904
DRIVER AMP.
906
AUTO SPARK COIL
+
-
TO POINTED ELECTRODE-216-


FIG. 13

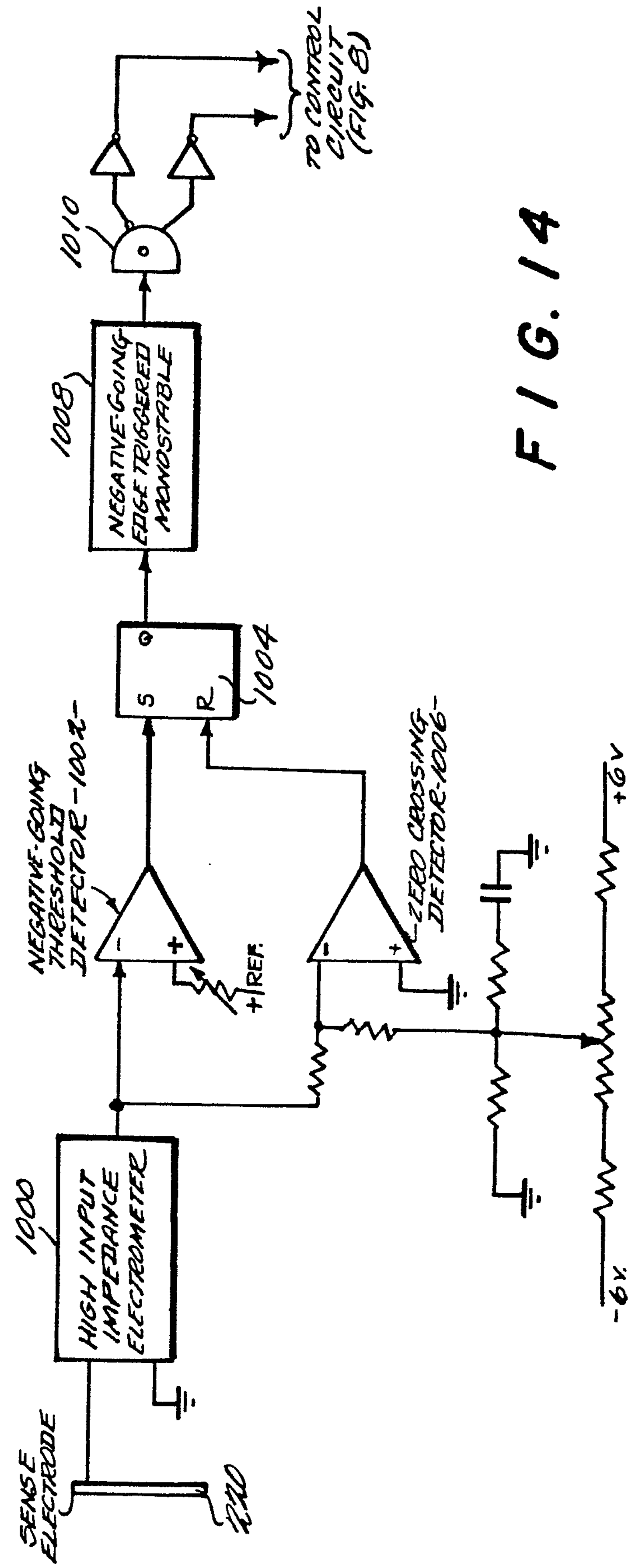

SENSE ELECTRODE
220
1000
HIGH INPUT IMPEDANCE ELECTROMETER
NEGATIVE-GOING THRESHOLD DETECTOR-1002-
+REF.
ZERO CROSSING DETECTOR-1006-
S
R
Q
1004
1008
NEGATIVE-GOING EDGE TRIGGERED MONOSTABLE
1010
TO CONTROL CIRCUIT (FIG. 8)
+6V
-6V


FIG. 14

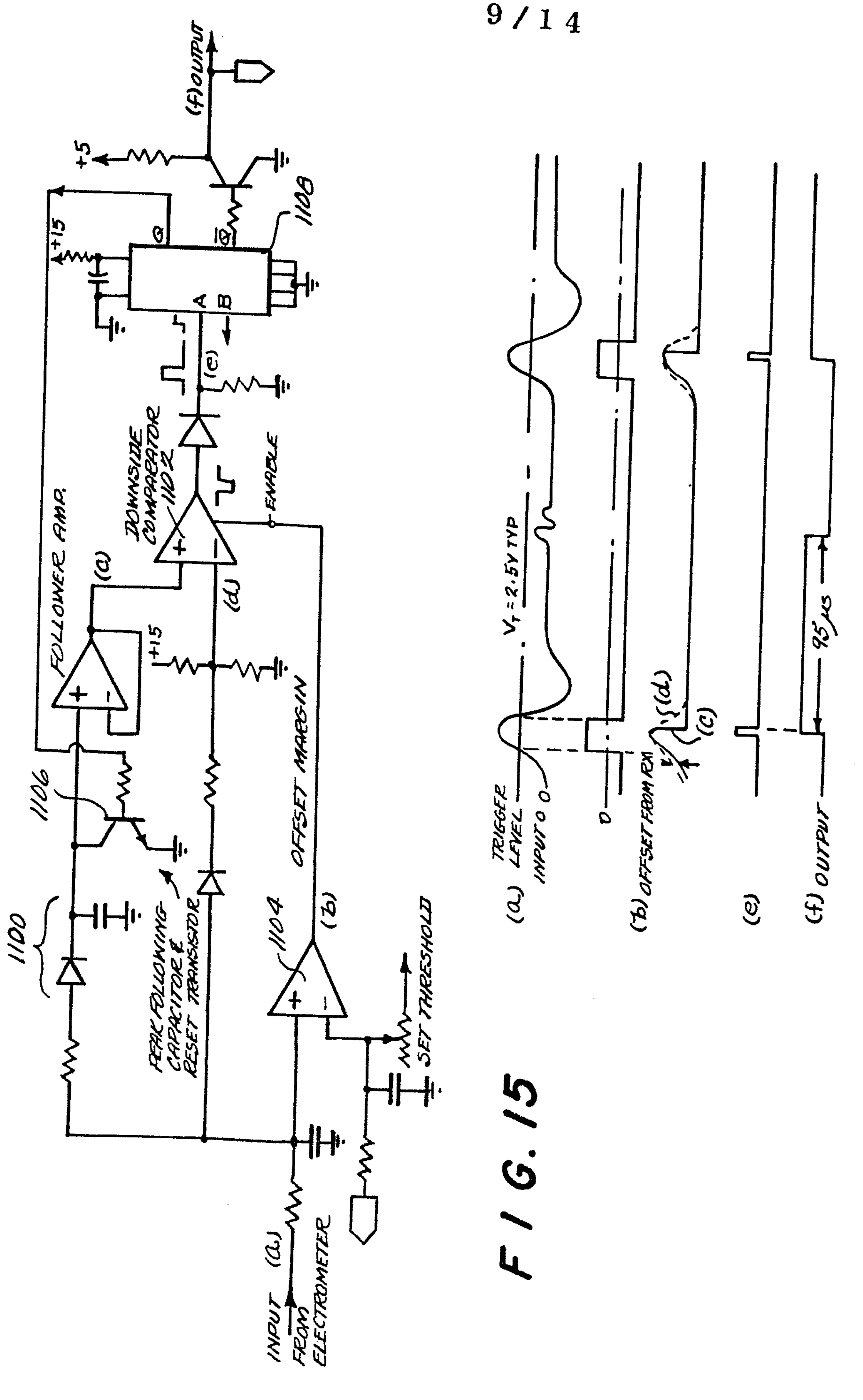
INPUT (a) FROM ELECTROMETER
1100
PEAK FOLLOWING CAPACITOR & RESET TRANSISTOR
1106
FOLLOWER AMP.
(c)
+15
(d)
DOWNSIDE COMPARATOR 1102
ENABLE
(e)
A
B
Q
1108
+15
+5
(f) OUTPUT
OFFSET MARGIN
1104
(b)
SET THRESHOLD
TRIGGER LEVEL
INPUT 0
$V_T$ = 2.5V TYP
(a)
(b) OFFSET FROM RX1
(d)
(c)
(e)
(f) OUTPUT
95 μs

FIG. 15

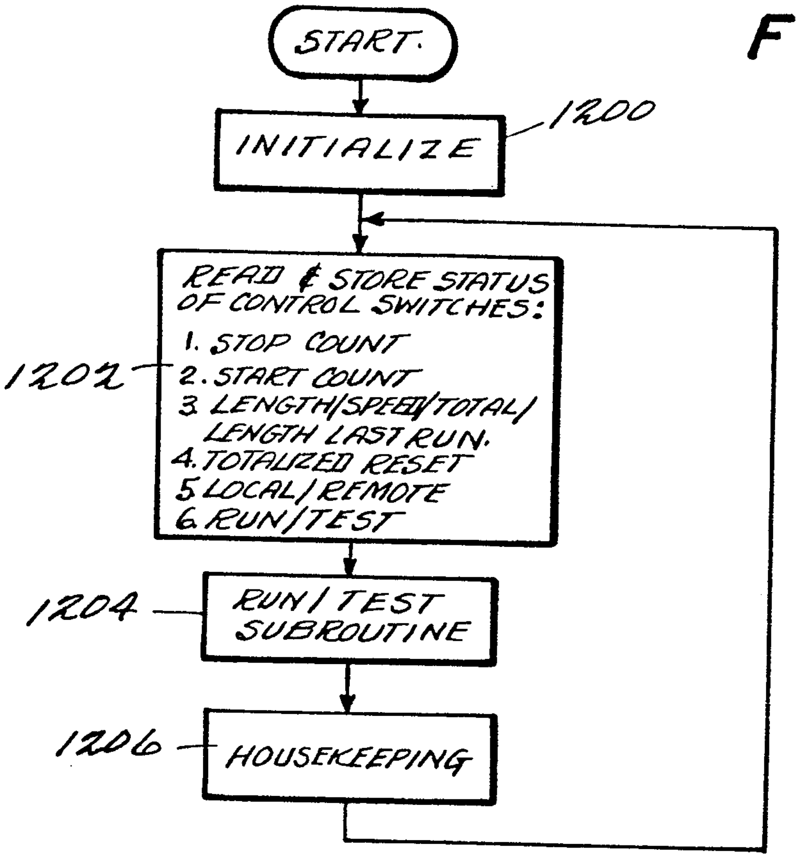
START
INITIALIZE
1200
READ & STORE STATUS OF CONTROL SWITCHES:
1. STOP COUNT
2. START COUNT
3. LENGTH/SPEED/TOTAL/ LENGTH LAST RUN.
4. TOTALIZED RESET
5. LOCAL/REMOTE
6. RUN/TEST
1202
RUN/TEST SUBROUTINE
1204
HOUSEKEEPING
1206

FIG. 16

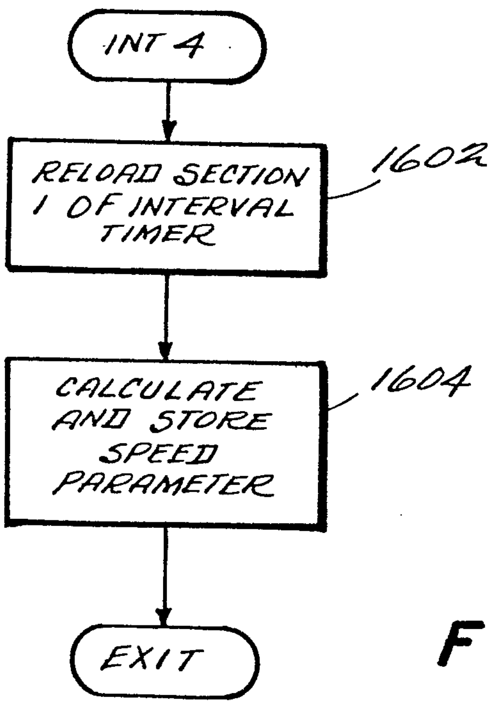
INT 4
RELOAD SECTION 1 OF INTERVAL TIMER
1602
CALCULATE AND STORE SPEED PARAMETER
1604
EXIT

FIG. 20

FIG. 17

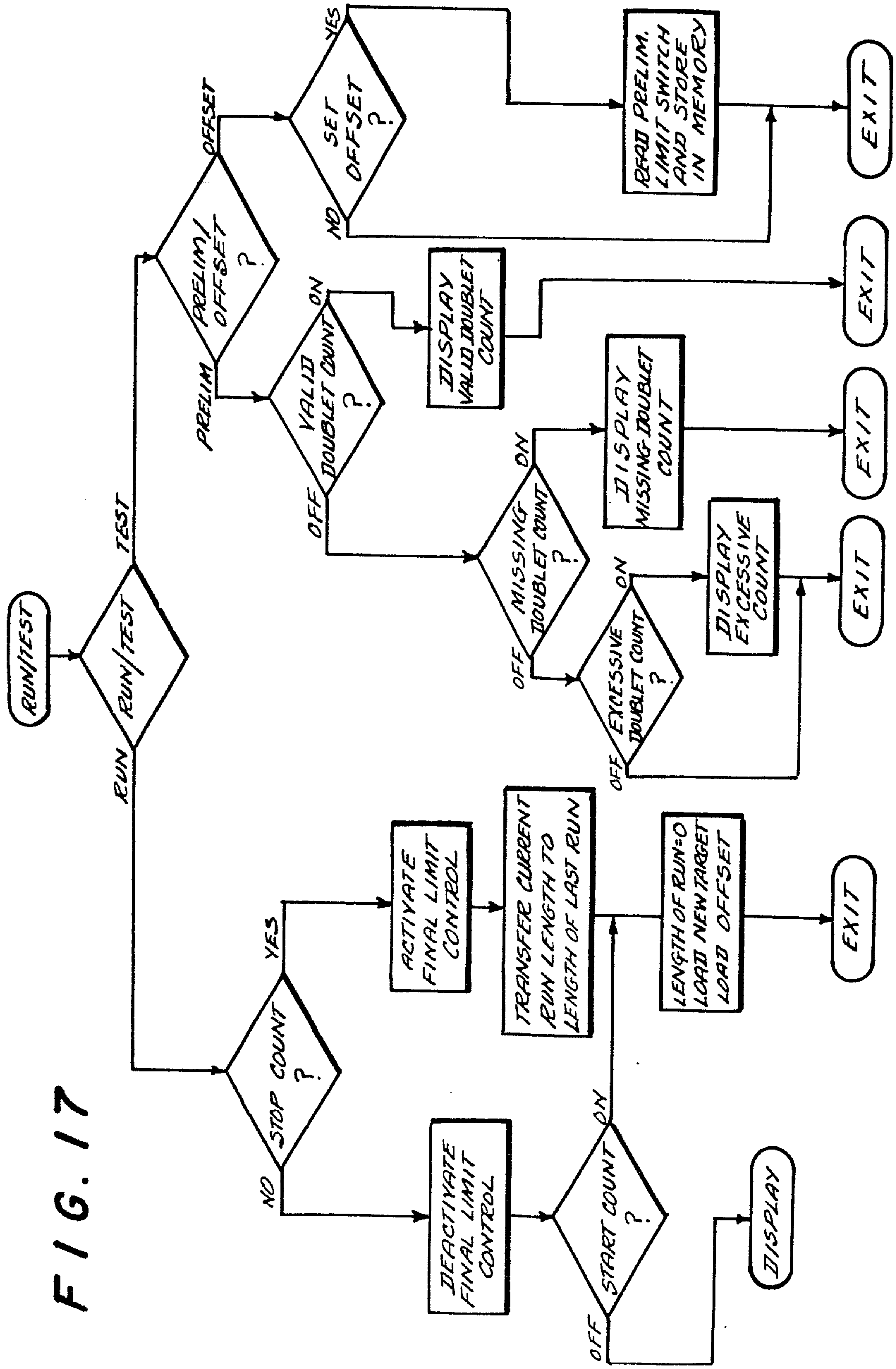
RUN/TEST
RUN/TEST
RUN
TEST
PRELIM/OFFSET ?
PRELIM
OFFSET
SET OFFSET ?
YES
NO
READ PRELIM. LIMIT SWITCH AND STORE IN MEMORY
EXIT
VALID DOUBLET COUNT ?
ON
OFF
DISPLAY VALID DOUBLET COUNT
EXIT
MISSING DOUBLET COUNT ?
ON
OFF
DISPLAY MISSING DOUBLET COUNT
EXIT
EXCESSIVE DOUBLET COUNT ?
ON
OFF
DISPLAY EXCESSIVE COUNT
EXIT
STOP COUNT ?
YES
NO
ACTIVATE FINAL LIMIT CONTROL
TRANSFER CURRENT RUN LENGTH TO LENGTH OF LAST RUN
LENGTH OF RUN=0 LOAD NEW TARGET LOAD OFFSET
EXIT
DEACTIVATE FINAL LIMIT CONTROL
START COUNT ?
ON
OFF
DISPLAY

FIG. 18

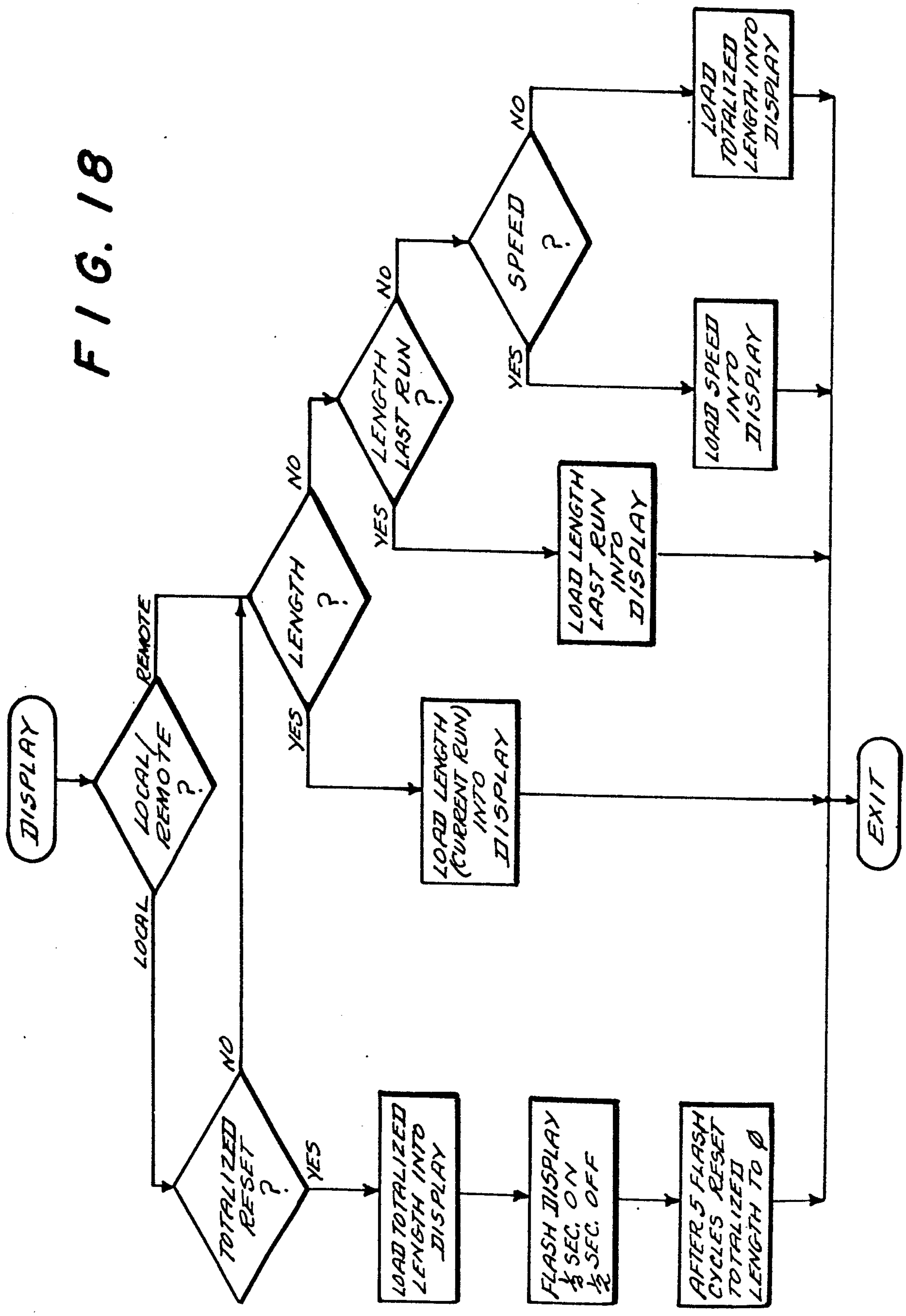
DISPLAY
LOCAL/REMOTE ?
LOCAL
REMOTE
TOTALIZED RESET ?
YES
NO
LOAD TOTALIZED LENGTH INTO DISPLAY
FLASH DISPLAY ½ SEC. ON ½ SEC. OFF
AFTER 5 FLASH CYCLES RESET TOTALIZED LENGTH TO Ø
LENGTH ?
YES
NO
LOAD LENGTH (CURRENT RUN) INTO DISPLAY
LENGTH LAST RUN ?
YES
NO
LOAD LENGTH LAST RUN INTO DISPLAY
SPEED ?
YES
NO
LOAD SPEED INTO DISPLAY
LOAD TOTALIZED LENGTH INTO DISPLAY
EXIT

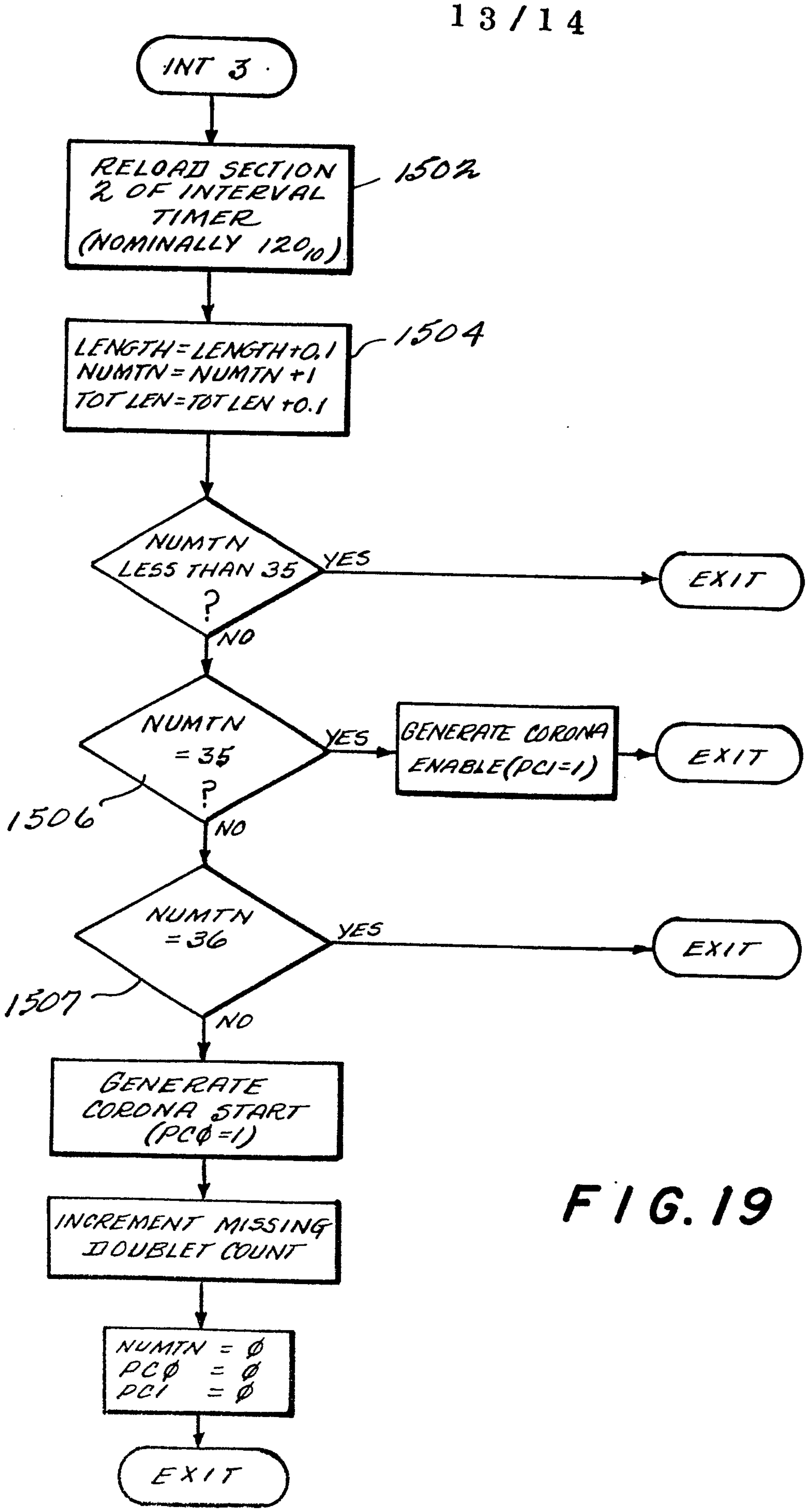
INT 3
RELOAD SECTION 2 OF INTERVAL TIMER (NOMINALLY $120_{10}$)
1502
LENGTH = LENGTH + 0.1
NUMTN = NUMTN + 1
TOT LEN = TOT LEN + 0.1
1504
NUMTN LESS THAN 35 ?
YES
EXIT
NO
NUMTN = 35 ?
YES
GENERATE CORONA ENABLE (PC1=1)
EXIT
1506
NO
NUMTN = 36
YES
EXIT
1507
NO
GENERATE CORONA START (PCØ=1)
INCREMENT MISSING DOUBLET COUNT
NUMTN = Ø
PCØ = Ø
PC1 = Ø
EXIT

FIG. 19

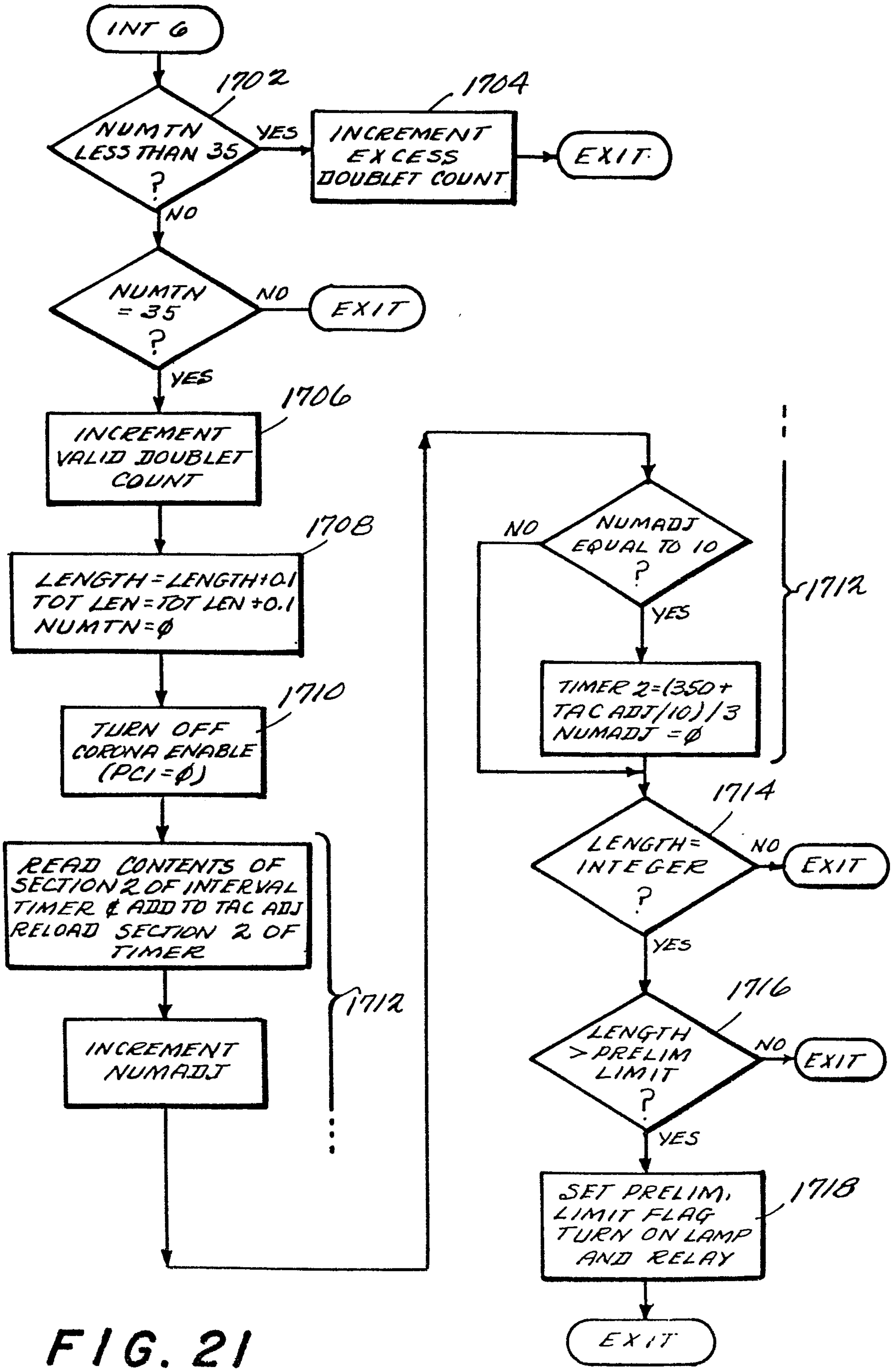
INT 6
1702
NUMTN LESS THAN 35 ?
YES
1704
INCREMENT EXCESS DOUBLET COUNT
EXIT
NO
NUMTN = 35 ?
NO
EXIT
YES
1706
INCREMENT VALID DOUBLET COUNT
1708
LENGTH = LENGTH+0.1
TOT LEN = TOT LEN +0.1
NUMTN = Ø
1710
TURN OFF CORONA ENABLE (PC1 = Ø)
READ CONTENTS OF SECTION 2 OF INTERVAL TIMER & ADD TO TAC ADJ RELOAD SECTION 2 OF TIMER
1712
INCREMENT NUMADJ
NO
NUMADJ EQUAL TO 10 ?
YES
TIMER 2 = (350 + TAC ADJ/10)/3
NUMADJ = Ø
1712
1714
LENGTH = INTEGER ?
NO
EXIT
YES
1716
LENGTH > PRELIM LIMIT ?
NO
EXIT
YES
1718
SET PRELIM. LIMIT FLAG
TURN ON LAMP AND RELAY
EXIT

FIG. 21